(19) **Europäisches Patentamt / European Patent Office / Office européen des brevets**

(11) **EP 4 628 609 A1**

(12) **EUROPEAN PATENT APPLICATION**
published in accordance with Art. 153(4) EPC

(43) Date of publication:
08.10.2025 Bulletin 2025/41

(21) Application number: 23897882.9

(22) Date of filing: 30.11.2023

(51) International Patent Classification (IPC):
C22B 26/00 (2006.01)   B01D 61/02 (2006.01)
B01D 61/58 (2006.01)   B01D 69/00 (2006.01)
B01D 69/02 (2006.01)   B01D 69/10 (2006.01)
B01D 69/12 (2006.01)   B09B 3/30 (2022.01)
C01D 15/06 (2006.01)   C22B 3/22 (2006.01)
B09B 101/16 (2022.01)

(52) Cooperative Patent Classification (CPC):
B01D 61/02; B01D 61/58; B01D 69/00;
B01D 69/02; B01D 69/10; B01D 69/12; B09B 3/30;
C01D 15/06; C22B 3/22; C22B 26/00;
B09B 2101/16

(86) International application number:
PCT/JP2023/042994

(87) International publication number:
WO 2024/117236 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2022 JP 2022192379

(71) Applicant: Toray Industries, Inc.
Tokyo 103-8666 (JP)

(72) Inventors:
• MIYAMOTO Ryoma
Otsu-shi, Shiga 520-8558 (JP)
• HANADA Shigehisa
Otsu-shi, Shiga 520-8558 (JP)
• KOIWA Masakazu
Otsu-shi, Shiga 520-8558 (JP)
• YOSHIZAKI Tomoya
Otsu-shi, Shiga 520-8558 (JP)
• SOYA Takanori
Otsu-shi, Shiga 520-8558 (JP)

(74) Representative: Kador & Partner Part mbB
Corneliusstraße 15
80469 München (DE)

(54) **METHOD FOR RECOVERING ALKALI METAL SALT AND APPARATUS FOR RECOVERING ALKALI METAL SALT**

(57) The present invention relates to a method for recovering an alkali metal salt, said method comprising steps 1 and 2 below. Step 1 is a first nanofiltration step in which a solution X containing alkali metal ions is fed, as a to-be-treated liquid A, to a nanofiltration membrane unit A and is thereby separated into a liquid permeate A and a concentrated liquid B, then the concentrated liquid B is mixed with the residue of the to-be-treated liquid A and the result thereof is fed to the nanofiltration membrane unit A again, and more of the liquid permeate A is obtained. Step 2 is a second nanofiltration step in which: the liquid permeate A obtained in step 1 or a concentrated liquid of the liquid permeate A is fed, as a to-be-treated liquid B, to the nanofiltration membrane unit A and is thereby separated into a liquid permeate C and a concentrated liquid D, then the concentrated liquid D is mixed with the residue of the to-be-treated liquid B and the result thereof is fed to the nanofiltration membrane unit A again, and more of the liquid permeate C is obtained; or alternatively, the liquid permeate A obtained in step 1 or a concentrated liquid of the liquid permeate A is fed, as a to-be-treated liquid B, to a nanofiltration membrane unit B and is thereby separated into a liquid permeate C and a concentrated liquid D, then the concentrated liquid D is mixed with the residue of the to-be-treated liquid B and the result thereof is fed to the nanofiltration membrane unit B, and more of the liquid permeate C is obtained.

(Cont. next page)

# FIG. 1

**Description**

TECHNICAL FIELD

The present invention relates to a method for recovering an alkali metal salt and an apparatus for recovering an alkali metal salt.

BACKGROUND ART

In recent years, with the economic development of the world, the demand for mineral resources has been greatly increased. For example, lithium is increasingly demanded as a material for lithium ion batteries, and lithium carbonate is also used for a heat-resistant glass additive and a surface acoustic wave filter. In particular, those having a high purity are used for filters and transmitters for mobile phones and car navigation systems.

In addition, cobalt is widely used as an alloying element for special steels and magnetic materials in various industries. For example, the special steels are used in the fields of aerospace, generators, and special tools, and the magnetic materials are used in small headphones, small motors, and the like. Cobalt is also used as a raw material for a positive electrode material of a lithium ion battery, and the demand for cobalt is increasing with the spread of mobile information processing terminals such as smartphones and batteries for automobiles and power storage.

Nickel is used as stainless steel by taking advantage of high gloss and corrosion resistance thereof, and in recent years, there has been an increasing demand for nickel as a material for lithium ion batteries, similar to cobalt. In this way, as the demand for various rare metals increases, efforts to recover rare metals such as lithium, cobalt, and nickel from used lithium ion batteries, waste materials generated in a production process therefor, and the like have been promoted from the viewpoint of valuable resource recycling.

For example, recovery of resources from waste lithium ion batteries has been put into practical use mainly for rare metals such as cobalt and nickel, but since a solvent extraction method using a chelating reagent is the mainstream, there is a problem that the method has a large burden on the environment and is disadvantageous in terms of cost (Non-Patent Literature 1). In order to solve this problem, a separation and recovery method using a separation membrane such as an ultrafiltration membrane, a nanofiltration membrane, or a reverse osmosis membrane from an aqueous solution obtained by acid-leaching a waste lithium ion battery is disclosed (Patent Literature 1). However, since this separation and recovery method involves a single-stage process using a nanofiltration membrane, it is difficult to recover lithium with a high purity and a high recovery rate unless nanofiltration membrane performance is extremely improved.

Therefore, a separation and recovery method in which a nanofiltration membrane is treated in a plurality of stages is disclosed (Patent Literature 2). This method is a continuous process in which the lithium purity is improved by allowing a liquid that has permeated through the nanofiltration membrane to permeate through the nanofiltration membrane again, and the remaining lithium is recovered by allowing a liquid that has not permeated through the nanofiltration membrane to permeate through the nanofiltration membrane.

CITATION LIST

PATENT LITERATURE

Patent Literature 1: WO 2019/018333
Patent Literature 2: WO 2021/215484

NON-PATENT LITERATURE

Non Patent Literature 1: "Exploration business for promoting mineral resource development in fiscal 2017 (Mineral resource infrastructure maintenance survey project (Basic survey on formulating strategies for securing mineral resources)) report", Environmental and Energy Office of Mitsubishi Chemical Corporation, March 2018

SUMMARY OF INVENTION

TECHNICAL PROBLEM

However, in the method described in Patent Literature 2, since the process is complicated and continuous, in the case where a composition of the treatment target liquid changes or in the case where separation performance changes due to deterioration of the nanofiltration membrane or the like, the treatment step using the nanofiltration membrane may be unstable, and there is room for improvement in maintaining a predetermined lithium purity and recovery rate.

An object of the present invention is to provide a method for stably recovering an alkali metal salt with a high purity and a high recovery rate with a small number of steps from a lithium ion battery, and a waste material, a waste liquid, or an ore generated in a production process therefor.

SOLUTION TO PROBLEM

In order to achieve the above object, the present invention has the following configurations.

(1) A method for recovering an alkali metal salt, the method including the following step 1 and step 2,

step 1: a first nanofiltration step of feeding a solution X containing an alkali metal ion as a liquid to be treated A to a nanofiltration membrane unit A to separate the liquid to be treated A into a permeated liquid A and a concentrated liquid B, mixing the concentrated liquid B with a remaining portion of the liquid to be treated A, and feeding the mixture to the nanofiltration membrane unit A again to further obtain the permeated liquid A; and
step 2: a second nanofiltration step of
feeding the permeated liquid A obtained in the step 1 or a concentrated liquid of the permeated liquid A as a liquid to be treated B to the nanofiltration membrane unit A to separate the liquid to be treated B into a permeated liquid C and a concentrated liquid D, mixing the concentrated liquid D with a remaining portion of the liquid to be treated B, and feeding the mixture to the nanofiltration membrane unit A again to further obtain the permeated liquid C, or
feeding the permeated liquid A obtained in the step 1 or a concentrated liquid of the permeated liquid A as a liquid to be treated B to a nanofiltration membrane unit B to separate the liquid to be treated B into a permeated liquid C and a concentrated liquid D, mixing the concentrated liquid D with a remaining portion of the liquid to be treated B, and feeding the mixture to the nanofiltration membrane unit B again to further obtain the permeated liquid C.

(2) The method for recovering an alkali metal salt according to the above (1), in which a treatment for obtaining the permeated liquid C from the solution X through the step 1 and the step 2 is sequentially performed on N (N: an integer of 2 or more) solutions X,

the nanofiltration membrane unit B is used in the step 2, and
among the N solutions X, while performing the step 2 after performing the step 1 on a k-th solution X(k) (k: an integer of 1 or more and (N-1) or less), the step 1 is performed on a (k+1)th solution X(k+1) in parallel.

(3) The method for recovering an alkali metal salt according to the above (1) or (2), further including: a step of diluting at least one of the liquid to be treated A and the liquid to be treated B .
(4) The method for recovering an alkali metal salt according to the above (2) or (3), further including the following step 3,
step 3: a reverse osmosis filtration step of concentrating at least one of a k-th permeated liquid A(k) and a k-th permeated liquid C(k) for at least one solution X(k).
(5) The method for recovering an alkali metal salt according to the above (4), in which the step 3 is performed only once on the permeated liquid C(k).
(6) The method for recovering an alkali metal salt according to any one of the above (1) to (5), in which the solution X has a pH of 4 or less.
(7) The method for recovering an alkali metal salt according to any one of the above (1) to (6), in which the alkali metal ion includes a lithium ion.
(8) The method for recovering an alkali metal salt according to any one of the above (1) to (7), further including the following step 4,
step 4: a step of adding a remaining portion of a k-th liquid to be treated B(k) (k: an integer of 1 or more and (N-1) or less), which has been mixed with a k-th concentrated liquid D(k), to an m-th solution X(m) (m: an integer of (k+1) or more and N or less) or an m-th liquid to be treated A(m) after end of the step 2 on the k-th solution X(k) among N solutions X (N: an integer of 2 or more) when the N solutions X are present.
(9) The method for recovering an alkali metal salt according to any one of the above (1) to (8), in which

a nanofiltration membrane included in at least one of the nanofiltration membrane unit A and the nanofiltration membrane unit B has a porous support membrane and a separation functional layer, and
when the nanofiltration membrane is irradiated with a positron beam from a surface on a separation functional layer side, an average pore diameter R1 and an average pore diameter R2 of the separation functional layer derived from a positron annihilation lifetime measurement method satisfy $0.90 \leq R1/R2 \leq 1.10$,

R1: an average pore diameter under condition of positron beam intensity of 0.1 keV

R2: an average pore diameter under condition of positron beam intensity of 0.5 keV. (10) The method for recovering an alkali metal salt according to any one of the above (1) to (9), in which at least one of the step 1 and the step 2 is performed at a constant permeation flow rate, and at least one of the step 1 and the step 2 is ended when an alkali metal ion recovery rate A (%) reaches a target value based on the following equation (2) while monitoring a temporal change in an operating pressure.

[Math. 1]

$$A(\%) = \frac{(Q_F - (1-S)^{-R} Q_c)}{V_0} \int_0^{t_b} \frac{P}{P_0} \, dt \qquad (2)$$

[In the equation (2), the alkali metal ion recovery rate A (%), an operating pressure P (Pa), an initial operating pressure $P_0$ (Pa), an initial liquid amount $V_0$ ($m^3$) of a treatment target, an alkali metal ion removal rate R (%) of nanofiltration membrane, a liquid recovery rate S (%) in nanofiltration step, a feed flow rate $Q_F$ ($m^3$/s), a concentrated liquid flow rate $Q_c$ ($m^3$/s), and a filtration end time $t = tb$]

(11) The method for recovering an alkali metal salt according to any one of the above (4) to (10), in which at least one of the permeated liquid A(k) and the permeated liquid C(k) contains a neutral molecule having no charge under a condition of a pH of 3 or less, and a reverse osmosis filtration membrane used in the reverse osmosis filtration step is a low-removal reverse osmosis membrane in which an isopropyl alcohol removal rate when an isopropyl alcohol aqueous solution having a temperature of 25°C and a pH of 6.5 is permeated at an operating pressure of 0.5 MPa is 70% or more and less than 85%.

(12) The method for recovering an alkali metal salt according to the above (11), in which the neutral molecule is a boron compound.

(13) The method for recovering an alkali metal salt according to above (12), in which the step 3 includes a circulation step of mixing a concentrated liquid obtained in the reverse osmosis filtration step with a solution to be supplied to the reverse osmosis filtration step.

(14) The method for recovering an alkali metal salt according to any one of the above (11) to (13), further including: a step of feeding a permeated liquid obtained in the reverse osmosis filtration step to a high-removal reverse osmosis membrane unit including a high-removal reverse osmosis membrane having an isopropyl alcohol removal rate of 85% or more and 95% or less when an isopropyl alcohol aqueous solution having a temperature of 25°C and a pH of 6.5 is permeated at an operating pressure of 0.5 MPa, and adding a obtained permeated liquid as dilution water for diluting at least one of the liquid to be treated A and the liquid to be treated B.

(15) An apparatus for recovering an alkali metal salt, including:

a first separation unit configured to separate a solution containing an alkali metal ion as a liquid to be treated A into a permeated liquid A and a concentrated liquid B using a first nanofiltration membrane unit;

a first circulation unit configured to mix the concentrated liquid B with a remaining portion of the liquid to be treated A;

a second separation unit configured to separate the permeated liquid A or a concentrated liquid of the permeated liquid A as a liquid to be treated B into a permeated liquid C and a concentrated liquid D using a second nanofiltration membrane unit;

a second circulation unit configured to mix the concentrated liquid D with a remaining portion of the liquid to be treated B;

a dilution unit configured to add dilution water to at least one of the liquid to be treated A and the liquid to be treated B;

a flow rate control unit configured to control flow rates of the permeated liquid A and the concentrated liquid B in the first separation unit and flow rates of the permeated liquid C and the concentrated liquid D in the second separation unit; and

a flow rate control unit configured to synchronize, in the dilution unit, an addition flow rate of the dilution water and a permeated liquid flow rate when the liquid to be treated, to which the dilution water has been added, is fed to the nanofiltration membrane unit.

ADVANTAGEOUS EFFECTS OF INVENTION

According to the method for recovering an alkali metal salt of the present invention, a salt of an alkali metal such as lithium or cesium can be stably recovered with a high purity and a high recovery rate from a solution containing an alkali metal ion with a small number of steps.

BRIEF DESCRIPTION OF DRAWINGS

[FIG. 1] FIG. 1 is a schematic flowchart showing a method for recovering an alkali metal salt according to one embodiment of the present invention.
[FIG. 2] FIG. 2 is a schematic flowchart showing a method for recovering an alkali metal salt according to another embodiment of the present invention.
[FIG. 3] FIG. 3 is a schematic flowchart showing a method for recovering an alkali metal salt according to still another embodiment of the present invention.
[FIG. 4] FIG. 4 is a schematic flowchart showing a method for recovering an alkali metal salt in a comparative embodiment.
[FIG. 5] FIG. 5 is a schematic flowchart showing a method for recovering a metal salt according to yet still another embodiment of the present invention.
[FIG. 6] FIG. 6 is a schematic flowchart showing a method for recovering an alkali metal salt in a comparative embodiment.
[FIG. 7] FIG. 7 is a schematic flowchart showing a method for recovering an alkali metal salt in a comparative embodiment.
[FIG. 8] FIG. 8 is a schematic flowchart showing a method for recovering an alkali metal salt according to further still another embodiment of the present invention.
[FIG. 9] FIG. 9 is a schematic flowchart showing a method for recovering an alkali metal salt according to further still another embodiment of the present invention.
[FIG. 10] FIG. 10 is a schematic flowchart showing a method for recovering an alkali metal salt according to further still another embodiment of the present invention.

DESCRIPTION OF EMBODIMENTS

Hereinafter, embodiments of the present invention are described in detail, but the present invention is not limited to the following embodiments and can be freely modified and implemented without departing from the gist of the present invention.

(1) Method for Recovering Alkali Metal Salt

A method for recovering an alkali metal salt according to the present invention is a method for recovering an alkali metal salt from a solution containing an alkali metal ion, and includes the following steps 1 and 2.
Step 1: a first nanofiltration step of feeding a solution X containing an alkali metal ion as a liquid to be treated A to a nanofiltration membrane unit A to separate the liquid to be treated A into a permeated liquid A and a concentrated liquid B, mixing the concentrated liquid B with a remaining portion of the liquid to be treated A, and feeding the mixture to the nanofiltration membrane unit A again to further obtain the permeated liquid A.
Step 2: a second nanofiltration step of feeding the permeated liquid A obtained in the step 1 or a concentrated liquid of the permeated liquid A as a liquid to be treated B to the nanofiltration membrane unit A to separate the liquid to be treated B into a permeated liquid C and a concentrated liquid D, mixing the concentrated liquid D with a remaining portion of the liquid to be treated B, and feeding the mixture to the nanofiltration membrane unit A again to further obtain the permeated liquid C, or feeding the permeated liquid A obtained in the step 1 or a concentrated liquid of the permeated liquid A as a liquid to be treated B to a nanofiltration membrane unit B to separate the liquid to be treated B into a permeated liquid C and a concentrated liquid D, mixing the concentrated liquid D with a remaining portion of the liquid to be treated B, and feeding the mixture to the nanofiltration membrane unit B again to further obtain the permeated liquid C.
In the method for recovering an alkali metal salt according to the present embodiment, it is preferable that a treatment for obtaining the permeated liquid C from the solution X through the step 1 and the step 2 is sequentially performed on N (N: an integer of 2 or more) solutions X, the nanofiltration membrane unit B is used in the step 2, and while performing the step 2 after performing the step 1 on a k-th solution X(k) (k: an integer of 1 or more and (N-1) or less) among the N solutions X, the step 1 is performed on a (k+1)th solution X(k+1) at the same time. A series of treatment steps in which batch treatment steps in the step 1 and the step 2 are performed semi-continuously on a plurality of solutions is referred to as a semi-batch treatment step.

(2) Nanofiltration Step

In the nanofiltration step, the solution containing an alkali metal ion is separated into a permeated liquid and a concentrated liquid using a nanofiltration membrane.

A ratio of a concentration of the alkali metal ion to a concentration of a polyvalent metal ion (hereinafter referred to as an "alkali metal ion ratio") in the permeated liquid is higher than an alkali metal ion ratio in the solution X, and an alkali metal ion ratio in the concentrated liquid is lower than the alkali metal ion ratio in the solution X.

The concentration of the polyvalent metal ion is calculated, for example, by a sum of ion conversion concentrations of a cobalt ion, a nickel ion, and the like. In addition, the concentration of the alkali metal ion is calculated, for example, by a sum of ion conversion concentrations of a lithium ion, a cesium ion, and the like. Depending on the element, the alkali metal may be present as a polyatomic ion instead of a monoatomic ion in the solution, and the conversion concentration is a concentration assuming that the alkali metal is present as a monoatomic ion. The concentrations of the polyvalent metal ion and the alkali metal ion can be determined by, for example, analyzing a solution to be measured using a P-4010 type ICP (high-frequency inductively coupled plasma emission spectrometry) device manufactured by Hitachi, Ltd. and quantifying the concentrations (mg/L) of various ions.

(2-1) Solution Containing Alkali Metal Ion

It is sufficient that the solution X containing an alkali metal ion contains at least an alkali metal ion and one or more conjugate bases (for example, a chloride ion, a nitrate ion, a sulfate ion, a carbonate ion, or an acetate ion). The alkali metal ion and the conjugate base in the solution X may be present in the form of an alkali metal salt, and examples of the alkali metal salt include salts of lithium, sodium, potassium, rubidium, and cesium. Among them, a lithium salt is preferably contained from the viewpoint of the value of a recovery target. That is, the solution containing an alkali metal ion preferably contains a lithium ion (hereinafter, also referred to as "$Li^+$") as the alkali metal ion.

In the case where N solutions X containing an alkali metal ion are present, it is sufficient that each solution X contains at least an alkali metal ion and one or more conjugate bases, and compositions of the solutions such as the concentration of the alkali metal ion, the concentration of the polyvalent metal ion, and the pH may be different in each solution X. Among them, it is preferable that all the solutions X contain $Li^+$ as the alkali metal ion.

The solution X containing an alkali metal ion preferably contains at least one or more polyvalent metal ions in addition to the alkali metal ion. Examples of the polyvalent metal ion include polyvalent metal ions of alkaline earth metals such as magnesium, calcium, and strontium, typical elements (aluminum, tin, lead, and the like), and transition elements (iron, copper, cobalt, manganese, and the like).

In addition, the solution X containing an alkali metal ion may contain a neutral molecule having no charge under the condition of a pH of 3 or less, and the neutral molecule preferably has a molecular weight of 70 or less. Examples of the neutral molecule include formic acid, acetic acid, and a boron compound such as boric acid. Among them, the boron compound may be added as an additive of an electrolytic solution of a lithium ion battery for the purpose of improving properties of the battery, and thus may be contained in the solution X containing an alkali metal ion. For example, in the case where a boron compound is contained, it is a purification inhibitor during lithium recovery, but can be removed in a reverse osmosis filtration step to be described later. A concentration (mg/L) of boron in the solution X is preferably equal to or less than the concentration of the alkali metal ion as a recovery target, more preferably equal to or less than the concentration of the alkali metal ion as the recovery target $\times$ 0.5 (mg/L), and still more preferably equal to or less than the concentration of the alkali metal ion as the recovery target $\times$ 0.1 (mg/L).

The solution X containing an alkali metal ion preferably has a pH of 0 or more and 4 or less.

The pH of the solution X containing an alkali metal ion is preferably 4 or less, more preferably 3.5 or less, still more preferably 3 or less, and even more preferably 2.5 or less. When the pH is 4 or less, in the nanofiltration step, permeability of the alkali metal ion is increased while maintaining low permeability of the polyvalent metal ion.

In addition, the pH of the solution X containing an alkali metal ion is preferably 0 or more, more preferably 0.5 or more, and still more preferably 1 or more. When the pH is 0 or more, it is possible to prevent a decrease in selective separation performance of the nanofiltration membrane for the alkali metal ion with respect to the polyvalent metal ion during a long-term operation.

The solution X containing an alkali metal ion is preferably a solution in which a material containing lithium is dissolved with an acid. Specific examples of the material containing lithium include a lithium ion battery, and a waste material, a waste liquid, an ore, or a slag generated in a production process therefor. Among them, a lithium ion battery is preferred since there is a high demand for reuse and the purity of rare metals contained is high.

A lithium ion battery includes members such as a positive electrode material, a negative electrode material, a separator, and an electrolyte. Among these members, any member containing lithium can be used as the material of the solution X. The acid for dissolving the material containing lithium preferably contains at least one acid selected from the group consisting of hydrochloric acid, sulfuric acid, and nitric acid. A solution obtained by dissolving a member of a lithium ion battery with an acid contains, for example, nickel, cobalt, or manganese, in addition to lithium ions.

Examples of the method of dissolving a substance containing an alkali metal in an acid include a method of immersing the substance in an acidic aqueous solution. However, other methods may be used as long as the target alkali metal ion can be eluted. A temperature of the acidic aqueous solution to be brought into contact is preferably 10°C or higher and 100°C or lower, from the viewpoint of elution efficiency of the alkali metal ion. The temperature is more preferably 20°C or higher and 80°C or lower, from the viewpoint of cost and safety.

A solution obtained by dissolving the substance containing an alkali metal in an acid does not always have a constant composition, and the composition may vary depending on a variation in various ionic compositions in the substance, a dissolution condition in an acid, and the like. That is, in the case where N solutions X are present, the compositions of the N solutions X may be different from each other.

An amount of the solution X containing an alkali metal ion as a recovery target is not particularly limited, and in the case where N solutions X are present, the amounts of the N solutions X may be different from each other. From the viewpoint of treatment efficiency in each step, the amount of the solution X is preferably 10 L or more and 10,000 L or less.

The solution X containing an alkali metal ion may contain an organic compound. For example, in the case where the solution X is a solution obtained by dissolving a lithium ion battery with an acid, examples thereof include organic compounds such as polyvinylidene difluoride (PVDF), a polyolefin, and a carbonate ester derived from a binder, a separator, an electrolytic solution, and the like for connecting an active material to a current collector. Since these organic compounds may be foulants and cause a decrease in recovery efficiency of the alkali metal ion, these foulants may be removed by an ultrafiltration step to be described later.

In the case where N solutions X containing an alkali metal ion each contain a lithium ion as the alkali metal ion, the concentration of the lithium ion in the solution is preferably 0.5 mg/L or more and 10,000 mg/L or less. When the concentration of the lithium ion in the solution is 0.5 mg/L or more, the recovery efficiency of the lithium ion by membrane separation is improved. In addition, when the concentration of the lithium ion in the solution is 10,000 mg/L or less, an increase in osmotic pressure difference is prevented, and the membrane separation efficiency is improved. The concentration of the lithium ion in the solution is more preferably 10 mg/L or more and 8,000 mg/L or less, and still more preferably 100 mg/L or more and 6,000 mg/L or less.

The method for recovering an alkali metal salt according to the present embodiment can also be suitably used in the case where the alkali metal ion ratio in the solution X containing an alkali metal ion is 2.4 or less. In general, in the case where the alkali metal ion ratio is 2.4 or less, it is difficult to separate and recover the alkali metal ion and the polyvalent metal ion, but the method for recovering an alkali metal salt according to the present embodiment has high selective separability between the alkali metal ion and the polyvalent metal ion, and can effectively recover the alkali metal ion. In addition, the method for recovering an alkali metal salt according to the present embodiment can also be suitably used in the case where the alkali metal ion ratio in the solution X containing an alkali metal ion is 1 or less, or 0.5 or less.

(2-2) Nanofiltration Membrane

It is sufficient that the nanofiltration membrane used in the method for recovering an alkali metal salt according to the present embodiment has fractionation properties positioned between the reverse osmosis membrane and the ultrafiltration membrane, and it is preferable that a difference between a glucose removal rate when a 1,000 mg/L glucose aqueous solution having a temperature of 25°C and a pH of 6.5 is allowed to permeate at an operating pressure of 0.5 MPa and an isopropyl alcohol removal rate when a 1,000 mg/L isopropyl alcohol aqueous solution having a temperature of 25°C and a pH of 6.5 is allowed to permeate at an operating pressure of 0.5 MPa is 20% or more. Among them, it is more preferable, in the nanofiltration membrane, that the difference between the glucose removal rate when a 1,000 mg/L glucose aqueous solution having a temperature of 25°C and a pH of 6.5 is allowed to permeate at an operating pressure of 0.5 MPa and the isopropyl alcohol removal rate when a 1,000 mg/L isopropyl alcohol aqueous solution having a temperature of 25°C and a pH of 6.5 is allowed to permeate at an operating pressure of 0.5 MPa is 40% or more, the glucose removal rate is 70% or more, and a magnesium sulfate removal rate when a 2,000 mg/L magnesium sulfate aqueous solution having a temperature of 25°C and a pH of 6.5 is allowed to permeate at an operating pressure of 0.5 MPa is 95% or more. Hereinafter, in the description of the present application, the "glucose removal rate" simply means a glucose removal rate when a 1,000 mg/L glucose aqueous solution having a temperature of 25°C and a pH of 6.5 is allowed to permeate at an operating pressure of 0.5 MPa, the "isopropyl alcohol removal rate" means an isopropyl alcohol removal rate when a 1,000 mg/L isopropyl alcohol aqueous solution having a temperature of 25°C and a pH of 6.5 is allowed to permeate at an operating pressure of 0.5 MPa, and the "magnesium sulfate removal rate" means a magnesium sulfate removal rate when a 2,000 mg/L magnesium sulfate aqueous solution having a temperature of 25°C and a pH of 6.5 is allowed to permeate at an operating pressure of 0.5 MPa.

A membrane generally known as a reverse osmosis membrane can remove most of organic substances and ions. On the other hand, an ultrafiltration membrane generally removes high molecular weight organic substances without removing most of the ion species.

In order to separate the alkali metal ion and the polyvalent metal ion, it is preferable that the nanofiltration membrane has a charge on the membrane surface and can perform both separation by pores (size separation) and electrostatic separation by charges. For example, in the case of a nanofiltration membrane in which the difference between the glucose removal rate and the isopropyl alcohol removal rate is 40% or more, the glucose removal rate is 70% or more, and a difference between the magnesium sulfate removal rate and a magnesium chloride removal rate when a 2,000 mg/L magnesium chloride aqueous solution having a temperature of 25°C and a pH of 6.5 is allowed to permeate at an operating pressure of 0.5 MPa is 20% or less, both the size separation and the electrostatic separation are possible. Hereinafter, the "magnesium chloride removal rate" in the description of the present application means the magnesium chloride removal rate when a 2,000 mg/L magnesium chloride aqueous solution having a temperature of 25°C and a pH of 6.5 is allowed to permeate at an operating pressure of 0.5 MPa.

As a material of the nanofiltration membrane, a polymer such as a cellulose acetate-based polymer, a polyamide, a sulfonated polysulfone, a poly acrylonitrile, a polyester, polyimide, or a vinyl polymer is used. The nanofiltration membrane may be composed of only one material or may be composed of a plurality of materials. In addition, a structure of the membrane may be an asymmetric membrane having a dense layer on at least one surface of the membrane and fine pores having a gradually large pore diameter from the dense layer toward the inside of the membrane or the other surface, or a composite semipermeable membrane having a very thin separation functional layer formed of another material on the dense layer of the asymmetric membrane.

The composite semipermeable membrane is preferably, for example, a membrane having a porous support membrane containing a polysulfone and a separation functional layer containing a polyamide provided on the porous support membrane. The composite semipermeable membrane may include a substrate in addition to the porous support membrane and the separation functional layer, and in this case, the porous support membrane is provided on the substrate. The polyamide is a thin membrane formed on the porous support membrane by an interfacial polycondensation reaction between a polyfunctional aliphatic amine and a polyfunctional aromatic acid halide.

In the method for recovering an alkali metal salt according to the present embodiment, it is preferable that a nanofiltration membrane included in at least one of the nanofiltration membrane unit A and the nanofiltration membrane unit B has a porous support membrane and a separation functional layer, and when the nanofiltration membrane is irradiated with a positron beam from a surface on a separation functional layer side, an average pore diameter R1 and an average pore diameter R2 of the separation functional layer derived from a positron annihilation lifetime measurement method satisfy $0.90 \leq R1/R2 \leq 1.10$. Here, R1 and R2 are defined as follows.

> R1: an average pore diameter under condition of positron beam intensity of 0.1 keV
> R2: an average pore diameter under condition of positron beam intensity of 0.5 keV

The "positron annihilation lifetime measurement method" is a method of measuring a time (on the order of several hundreds of picoseconds to several tens of nanoseconds) from a time when a positron is incident on a sample to a time when the positron is annihilated, and non-destructively evaluating information such as a size of pores of 0.1 nm to 10 nm, a number density thereof, and a distribution of the size based on the annihilation lifetime.

Note that, a measurement range in a depth direction from the sample surface can be adjusted based on an amount of energy of the positron beam incident on the sample. As the energy increases, a deeper portion from the sample surface is included in the measurement region, and the depth depends on the density of the sample. For example, in measurement for a separation functional layer of a composite semipermeable membrane, when a positron beam having an energy of about 0.1 keV is emitted from the separation functional layer side of the composite semipermeable membrane, a region at a depth of 1.0 nm to 5.0 nm from the sample surface is generally measured, and when a positron beam having an energy of about 0.5 keV is emitted, a region at a depth of 10 nm to 50 nm from the sample surface is generally measured. Note that, in the case of providing another layer such as a protective layer on the separation functional layer, the average pore diameter of the separation functional layer can be measured by removing the another layer in advance.

In the present embodiment, a thickness of the separation functional layer in the composite semipermeable membrane is preferably 15 nm or more and 50 nm or less. Therefore, under the condition of a positron beam intensity of 0.1 keV, the average pore diameter on the surface side of the separation functional layer (the side opposite to the porous support membrane side) is reflected, and under the condition of a positron beam intensity of 0.5 keV, the average pore diameter on the porous support membrane side of the separation functional layer is reflected. It can be said that the closer R1/R2 is to 1, the more uniform the pore diameter is in a membrane thickness direction. It is presumed that a direction in which ions diffuse in the separation functional layer is uniform owing to the uniform pore diameter in the membrane thickness direction, and permeation resistance of a monovalent ion having a size capable of freely moving in the separation functional layer is suppressed. As a result, it is considered that excellent monovalent ion/polyvalent ion selective separation performance is realized. Therefore, R1/R2 is more preferably 0.92 or more and 1.05 or less, and still more preferably 0.94 or more and 1.03 or less.

9

In addition, R1 is preferably 0.55 nm or more and 0.70 nm or less, more preferably 0.57 nm or more and 0.68 nm or less, and still more preferably 0.60 nm or more and 0.65 nm or less. When R1 is within the above range, an effect of inhibiting permeation of the polyvalent metal ion while suppressing the permeation resistance of the alkali metal ion is remarkable.

In order for R1 and R2 to satisfy the above relationship, for example, there is exemplified a method in which a relative humidity during interfacial polycondensation between a polyfunctional aliphatic amine compound and a polyfunctional aromatic acid halide to be described later is controlled to be high, for example, 80% or more, and the molecular weight of the polyfunctional aliphatic amine forming the separation functional layer in the composite semipermeable membrane is set to be 90 or more.

The separation functional layer in the composite semipermeable membrane preferably contains 50 mass% or more, more preferably 80 mass% or more, and still more preferably 90 mass% or more, of a semi-aromatic crosslinked polyamide obtained by interfacial polycondensation between a divalent or higher polyfunctional aliphatic amine compound and a divalent or higher polyfunctional aromatic acid halide, and particularly preferably consists of only the semi-aromatic crosslinked polyamide. When the semi-aromatic crosslinked polyamide is contained in an amount of 50 mass% or more, excessive densification due to $\pi$-$\pi$ interaction derived from an aromatic ring in the semi-aromatic crosslinked polyamide is prevented, and excellent alkali metal ion permeability is obtained. As a result of intensive studies, the inventors of the present invention have found that in the case where the relative humidity during the interfacial polycondensation is controlled to be high, for example, 80% or more, the obtained composite semipermeable membrane exhibits particularly excellent membrane performance under an acidic condition. Note that, the relative humidity can be adjusted by using a precision air conditioner or the like. When an atmosphere humidity during the interfacial polycondensation is 80% or more, evaporation of moisture in the formed polyamide can be prevented, and insolubilization due to intermolecular hydrogen bonding of an oligomer having a large amount of amino groups generated in excess can be prevented. Accordingly, it is considered that the oligomer can be efficiently removed after the separation functional layer is formed by the interfacial polycondensation reaction, and thus it is possible to prevent the pore diameter from expansion due to swelling of the semi-aromatic crosslinked polyamide during a membrane operation under an acidic condition, and to obtain a composite semipermeable membrane exhibiting excellent polyvalent ion removability, that is, a predetermined glucose removal rate, isopropyl alcohol removal rate, magnesium sulfate removal rate, and the like.

The polyfunctional aliphatic amine is preferably an alicyclic diamine, and more preferably a bipiperidine derivative or a piperazine derivative.

The alicyclic diamine preferably has a molecular weight of 90 or more. In the case where the molecular weight of the alicyclic diamine is 90 or more, a diffusion coefficient of the amine is reduced, and the polyamide is gradually formed during the interfacial polycondensation, so that a separation functional layer having a uniform pore diameter in the membrane thickness direction is easily formed from an initial stage to a middle stage of the interfacial polycondensation. On the other hand, the molecular weight of the alicyclic diamine is preferably 160 or less. Generally, at the initial and final stages of the interfacial polycondensation, the oligomer is excessively generated on the surface of the support in contact with an organic layer, and the pores on the surface of the support are blocked, which causes a pore diameter distribution in the membrane thickness direction to be non-uniform. However, in the case where the molecular weight of the alicyclic diamine is 160 or less, the molecular weight of the generated oligomer is reduced and the interaction with the semi-aromatic crosslinked polyamide can be reduced, so that after the separation functional layer is formed by the interfacial polycondensation reaction, the oligomer is easily detached from the separation functional layer, and a separation functional layer having a uniform pore diameter in the membrane thickness direction is easily formed.

Examples of the alicyclic diamine having a molecular weight of 90 or more and 160 or less include substituted piperazines in which a piperazine ring is substituted with an alkyl group having 1 to 3 carbon atoms (for example, 2-methylpiperazine, 2-ethylpiperazine, 2-normalpropylpiperazine, 2,2-dimethylpiperazine, 2,2-diethylpiperazine, 2,3-dimethylpiperazine, 2,3-diethylpiperazine, 2,5-dimethylpiperazine, 2,5-diethylpiperazine, 2,6-dimethylpiperazine, 2,6-diethylpiperazine, and 2,3,5,6-tetramethylpiperazine), and homopiperazine.

The "polyfunctional aromatic acid halide" is an aromatic acid halide having two or more halogenated carbonyl groups in one molecule, and is not particularly limited as long as it gives a semi-aromatic crosslinked polyamide by a reaction with the polyfunctional aliphatic amine. As the polyfunctional aromatic acid halide, for example, halides such as 1,3,5-benzenetricarboxylic acid, 1,2,4-benzenetricarboxylic acid, 1,3-benzenedicarboxylic acid, 1,4-benzenedicarboxylic acid, 1,3,5-benzenetrisulfonic acid, and 1,3,6-naphthalenetrisulfonic acid can be used. Among the polyfunctional aromatic acid halides, an acid chloride is preferred, and in terms of economic efficiency, availability, ease of handling, ease of reactivity, and the like, trimesoyl chloride which is an acid halide of 1,3,5-benzenetricarboxylic acid, isophthalic acid chloride which is an acid halide of 1,3-benzenedicarboxylic acid, terephthalic acid chloride which is an acid halide of 1,4-benzenedicarboxylic acid, 1,3,5-benzenetrisulfonic acid chloride which is an acid halide of 1,3,5-benzenetrisulfonic acid, and 1,3,6-naphthalenetrisulfonic acid chloride which is an acid halide of 1,3,6-naphthalenetrisulfonic acid are particularly preferred. The polyfunctional aromatic acid halide may be used alone or as a mixture of two or more kinds thereof. By mixing any one of bifunctional isophthalic acid chloride and terephthalic acid chloride with trifunctional trimesoyl chloride, 1,3,5-benzenetrisulfonic acid chloride, and 1,3,6-naphthalenetrisulfonic acid chloride, a molecular gap of a polyamide crosslinked structure is expanded, and a membrane having a uniform pore diameter distribution can be controlled in a wide range. A mixing molar ratio of the trifunctional acid chloride and the bifunctional acid chloride is preferably 1:20 to 50:1, and more preferably 1:1 to 20:1.

The above composite semipermeable membrane is obtained, for example, by forming a porous support membrane on a substrate, and then subjecting a polyfunctional aliphatic amine and a polyfunctional aromatic acid halide to interfacial polycondensation on the porous support membrane to form a separation functional layer containing a semi-aromatic crosslinked polyamide.

(2-3) Separation Using Nanofiltration Membrane

Since the alkali metal ion easily permeates through the nanofiltration membrane and the polyvalent metal ion hardly permeates through the nanofiltration membrane, the alkali metal ion and the polyvalent metal ion can be separated. The nanofiltration membrane is preferably used in a state of being incorporated into an element such as a spiral type.

(2-3-1) Step 1: First Nanofiltration Step

The first nanofiltration step (step 1) is a step of feeding a solution X as a liquid to be treated A to a nanofiltration membrane unit A to separate the liquid to be treated A into a permeated liquid A and a concentrated liquid B, further mixing the concentrated liquid B with a remaining portion of the liquid to be treated A, and feeding the mixture to the nanofiltration membrane unit A again to further obtain the permeated liquid A. In the step 1, the concentrated liquid B can be treated twice or more using the nanofiltration membrane unit A. The number of repetitions of the treatment can be freely set. In addition, the repetitive treatment in the step 1 may be ended when a recovery rate reaches a certain value to be described later. By allowing the liquid to be treated A to permeate through the nanofiltration membrane unit A while mixing the concentrated liquid B with the remaining portion of the liquid to be treated A, the alkali metal ion remaining in the concentrated liquid B can permeate through the nanofiltration membrane again, and an alkali metal ion recovery rate can be increased.

As the first nanofiltration step progresses, the amount of the permeated liquid A increases, the alkali metal ion recovery rate (%) increases, and the amount of the liquid to be treated A and the alkali metal ion ratio in the liquid to be treated A decrease.

In the first nanofiltration step, it is preferable to obtain a permeated liquid having an alkali metal ion ratio of 2 or more and 1,000 or less, it is more preferable to obtain a permeated liquid having an alkali metal ion ratio of 10 or more and 700 or less, and it is still more preferable to obtain a permeated liquid having an alkali metal ion ratio of 20 or more and 500 or less. When the alkali metal ion ratio is 2 or more, a treatment time in the subsequent second nanofiltration step can be shortened, and when the alkali metal ion ratio is 1,000 or less, the treatment time in this step can be shortened.

In addition, in the first nanofiltration step, the alkali metal ion recovery rate is preferably 80% or more, more preferably 90% or more, and still more preferably 95% or more. When the alkali metal ion recovery rate in the first nanofiltration step is 80% or more, a recovery cost for the alkali metal ion can be reduced. The alkali metal ion recovery rate in the nanofiltration step is defined by the following equation (1) for each step.

The alkali metal ion recovery rate (%) in nanofiltration step = {(amount of permeated liquid obtained in target nanofiltration step) × (concentration of alkali metal ion in permeated liquid obtained in target nanofiltration step)}/{(amount of treatment target liquid) × (concentration of initial alkali metal ion in treatment target liquid)} equation (1)

In the nanofiltration step, the solution is preferably supplied to the nanofiltration membrane at an operating pressure of 0.1 MPa or more and 8 MPa or less. When the operating pressure is 0.1 MPa or more, a membrane permeation rate is increased, and when the operating pressure is 8 MPa or less, damage to the nanofiltration membrane can be prevented. The operating pressure is more preferably 0.5 MPa or more and 6 MPa or less, and still more preferably 1 MPa or more and 4 MPa or less.

As the first nanofiltration step progresses, an osmotic pressure of the liquid to be treated A increases, and the operating pressure for obtaining the permeated liquid A at the same flow rate increases accordingly. Therefore, the method for recovering an alkali metal salt according to the present embodiment preferably includes a step of diluting the liquid to be treated A in order to facilitate continuation of filtration in the case where the osmotic pressure increases. Dilution of the liquid to be treated A is preferred since the osmotic pressure of the liquid to be treated A is reduced, the first nanofiltration step can be continued, and the alkali metal ion recovery rate can be increased.

Examples of the method of diluting the liquid to be treated A include a method of directly adding dilution water to the liquid to be treated A and a method of adding dilution water to the concentrated liquid B. Among them, a method of directly adding dilution water to the liquid to be treated A is preferred because of simplicity.

The dilution water is not particularly limited, such as pure water or an acidic solution, and it is preferable to use a permeated liquid having a low metal ion concentration generated in the reverse osmosis filtration step to be described later since it is possible to separate and recover the alkali metal ion with high efficiency and to reuse an acidic aqueous solution.

An operation control method in the first nanofiltration step includes, for example, constant flow rate filtration and low pressure filtration, and is not particularly limited. In the case of diluting the liquid to be treated A, constant flow rate filtration is preferred. In the case of constant flow rate filtration, the flow rate of dilution water to be added can be made constant, and control is easy.

In the case of constant flow rate filtration, a permeated liquid flow rate is preferably 1% or more of the amount of the solution X per minute from the viewpoint of $Li^+$ recovery efficiency, and the permeated liquid flow rate is preferably 50% or less of the amount of the solution X per minute from the viewpoint of ease of control.

A degree of progress of the first nanofiltration step, that is, the alkali metal ion recovery rate can be known by appropriately sampling the liquid to be treated A and analyzing the liquid composition. However, since it takes time to analyze the liquid composition, it is preferable that the alkali metal ion recovery rate can be constantly monitored.

As a method for monitoring the alkali metal ion recovery rate during the progress of the first nanofiltration step, in the case of performing the nanofiltration step at a constant permeation flow rate, there is a correlation between the operating pressure and the alkali metal ion recovery rate as in the following equation (2). Therefore, it is preferable to grasp an alkali metal ion recovery rate A (%) and determine an end time of the first nanofiltration step while monitoring a temporal change in the operating pressure according to the following equation By determining the end time of the first nanofiltration step while monitoring the operating pressure according to the equation (2), the time required for analyzing the liquid composition can be reduced, and the alkali metal ion can be efficiently recovered. Note that, the target alkali metal ion recovery rate A (%) can be appropriately set. At least one of the step 1 and the step 2 can be ended on a condition that the recovery rate reaches a target value.

[Math. 2]

$$A(\%) = \frac{(Q_F - (1 - S/100)^{-R} Q_c)}{V_0} \int_0^{t_b} \frac{P}{P_0} \, dt \qquad (2)$$

In the equation (2), the alkali metal ion recovery rate A (%), an operating pressure P (Pa), an initial operating pressure $P_0$ (Pa), an initial liquid amount $V_0$ ($m^3$) of a treatment target, an alkali metal ion removal rate R (%) of the nanofiltration membrane, a liquid recovery rate S (%) in the nanofiltration step, a feed flow rate $Q_F$ ($m^3$/s), a concentrated liquid flow rate $Q_c$ ($m^3$/s), and a filtration end time t = tb.

A liquid recovery rate S in the nanofiltration step is defined by S = {($Q_F$-$Q_c$)/$Q_F$} $\times$ 100.

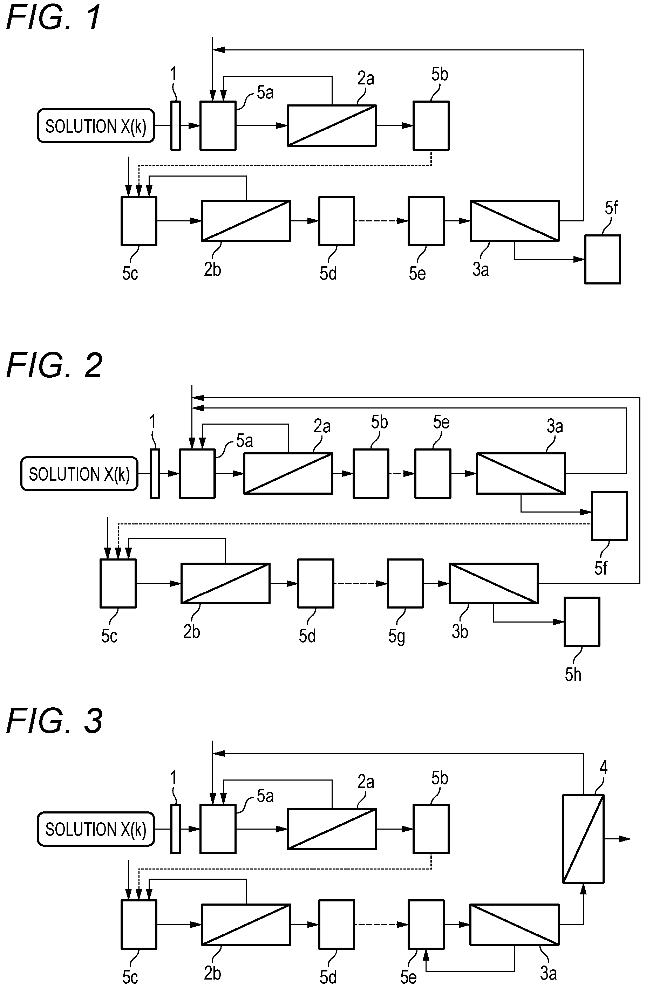

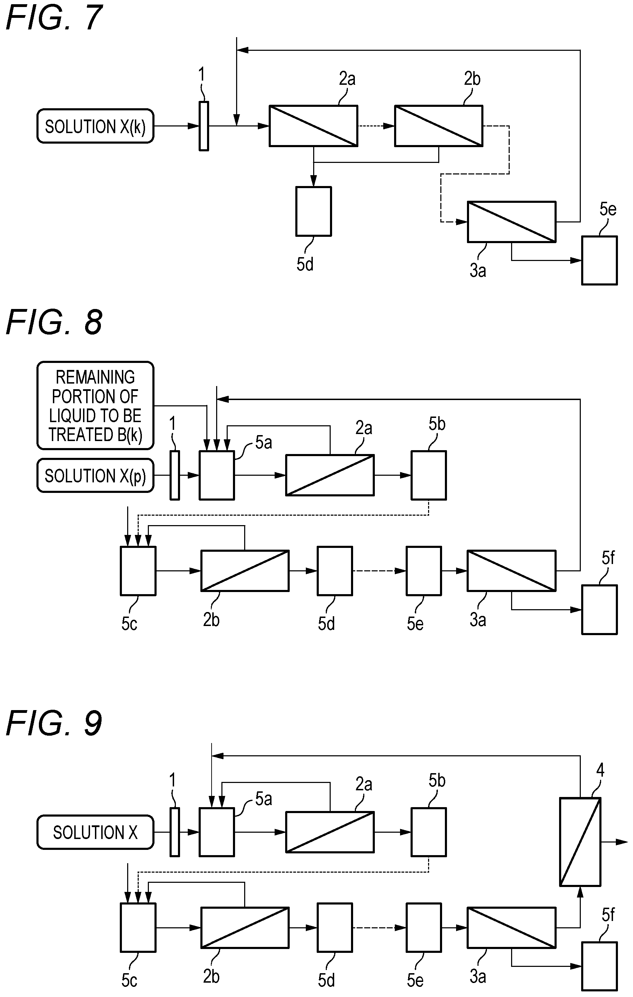

FIG. 1 to FIG. 3, FIG. 5, and FIG. 8 to FIG. 10 are each a schematic flowchart showing a method for recovering an alkali metal salt according to one embodiment of the present invention. The solution X is fed to an ultrafiltration membrane unit 1 to be described later, and the obtained permeated liquid is fed to a first tank 5a. The permeated liquid (liquid to be treated A) stored in the first tank 5a is fed to the nanofiltration membrane unit A (2a) and separated into the permeated liquid A and the concentrated liquid B. The permeated liquid A is fed to a second tank 5b at a constant flow rate, and the concentrated liquid B is fed to the first tank 5a and mixed with a remaining portion of the liquid to be treated A in the first tank 5a. The first nanofiltration step can be performed while adding dilution water to the first tank 5a at the same flow rate as the flow rate of the permeated liquid A. Note that, the dilution water may contain the permeated liquid obtained by the reverse osmosis filtration step to be described later. In the examples shown in FIG. 3 and FIG. 9, the permeated liquid obtained by the reverse osmosis filtration step to be described later is further fed to a high-removal reverse osmosis membrane unit 4, and the obtained permeated liquid is used as the dilution water.

(2-3-2) Step 2: Second Nanofiltration Step

The second nanofiltration step (step 2) is a step of feeding the permeated liquid A obtained in the first nanofiltration step (step 1) or a concentrated liquid of the permeated liquid A obtained in the step 1 as a liquid to be treated B to the nanofiltration membrane unit A to separate the liquid to be treated B into a permeated liquid C and a concentrated liquid D, mixing the concentrated liquid D with a remaining portion of the liquid to be treated B, and feeding the mixture to the nanofiltration membrane unit A again to further obtain the permeated liquid C, or a step of feeding the permeated liquid A obtained in the step 1 or a concentrated liquid of the permeated liquid A as a liquid to be treated B to a nanofiltration membrane unit B to separate the liquid to be treated B into a permeated liquid C and a concentrated liquid D, mixing the concentrated liquid D with a remaining portion of the liquid to be treated B, and feeding the mixture to the nanofiltration membrane unit B again to further obtain the permeated liquid C. In the step 2, the concentrated liquid D can be treated twice or more using the nanofiltration membrane unit A or the nanofiltration membrane unit B. The number of repetitions of the treatment can be freely set. In addition, the repetitive treatment in the step 2 may be ended when the recovery rate reaches a certain value as described above.

The concentrated liquid of the permeated liquid A can be prepared by a method of concentrating the permeated liquid A using a reverse osmosis membrane unit to be described later, or the like, but is not particularly limited.

In the second nanofiltration step, from the viewpoint of shortening the treatment time, the permeated liquid A is preferably used as the liquid to be treated B, and the nanofiltration membrane unit B is preferably used.

In the second nanofiltration step, it is preferable to obtain a permeated liquid C having an alkali metal ion ratio of 10 or more, it is more preferable to obtain a permeated liquid C having an alkali metal ion ratio of 100 or more, and it is still more preferable to obtain a permeated liquid C having an alkali metal ion ratio of 200 or more. When the alkali metal ion ratio is 10 or more, it can be said that the purity of the alkali metal ion is sufficiently high.

In addition, in the second nanofiltration step, the alkali metal ion recovery rate is preferably 80% or more, more preferably 90% or more, and still more preferably 95% or more. When the alkali metal ion recovery rate in the nanofiltration step for the permeated liquid is 80% or more, a recovery cost for an alkali metal can be reduced.

The second nanofiltration step is performed at least once. In the case where the alkali metal ion ratio in the solution X is small and the alkali metal ion ratio in the permeated liquid C does not reach a target value when the second nanofiltration step is performed once, the second nanofiltration step of using the permeated liquid C as the liquid to be treated B may be performed a plurality of times until the alkali metal ion ratio in the obtained permeated liquid reaches the target value. In the case where the second nanofiltration step is performed a plurality of times, the nanofiltration membrane unit used for the second and subsequent times may be either the nanofiltration membrane unit A or B, or another nanofiltration membrane unit may be used.

The second nanofiltration step preferably includes a step of diluting the liquid to be treated B as in the first nanofiltration step. In addition, the degree of progress of the step can be grasped according to the above equation (2).

An operation control method in the second nanofiltration step includes, for example, constant flow rate filtration and low pressure filtration.

In the case of constant flow rate filtration, a permeated liquid flow rate is preferably 1% or more of an initial amount of the liquid to be treated B per minute from the viewpoint of $Li^+$ recovery efficiency, and the permeated liquid flow rate is preferably 50% or less of the initial amount of the liquid to be treated B per minute from the viewpoint of ease of control.

In the examples shown in FIG. 1, FIG. 3, FIG. 8, and FIG. 9, the second nanofiltration step is performed by performing a nanofiltration step on the solution X using the nanofiltration membrane unit A (2a), feeding the permeated liquid A, which has permeated through the nanofiltration membrane unit A and stored in the second tank 5b, as the liquid to be treated B to a third tank 5c, feeding the liquid to be treated B to the nanofiltration membrane unit B (2b), and feeding the permeated liquid C to a fourth tank 5d at a constant flow rate. At this time, the concentrated liquid D that has not permeated through the nanofiltration membrane unit B (2b) is mixed with a remaining portion of the liquid to be treated B in the third tank 5c. In addition, the second nanofiltration step can be performed while adding dilution water to the liquid to be treated B in the third tank 5c at the same flow rate as the flow rate of the permeated liquid C.

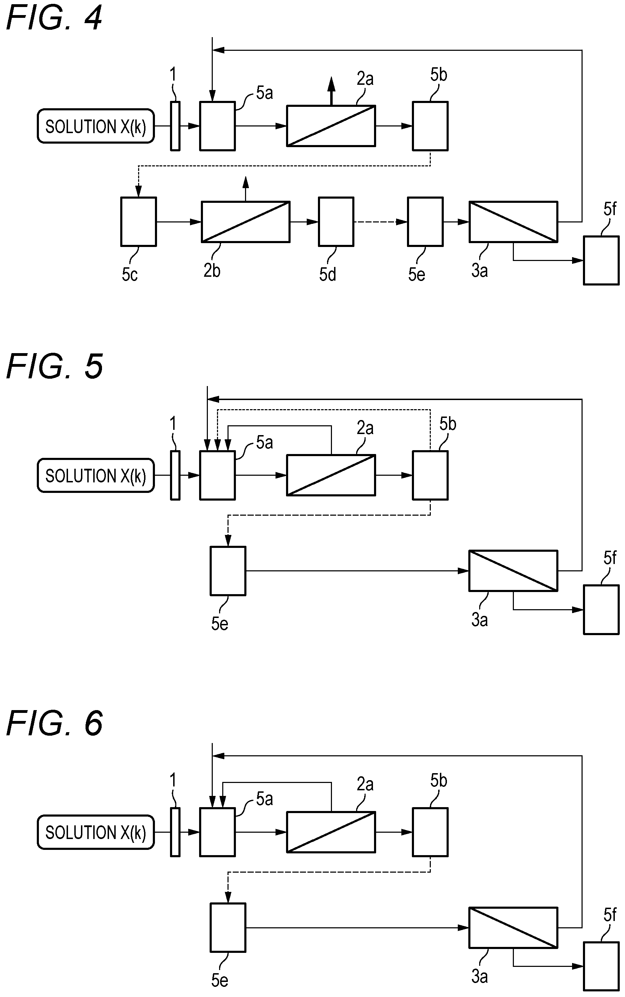

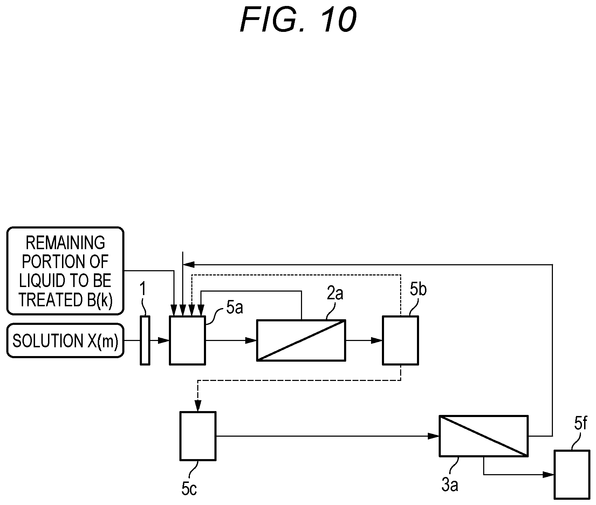

In the examples shown in FIG. 5 and FIG. 10, the second nanofiltration step is performed by performing a nanofiltration step on the solution X using the nanofiltration membrane unit A (2a), feeding the permeated liquid A, which has permeated through the nanofiltration membrane unit A and stored in the second tank 5b, as the liquid to be treated B to the first tank 5a, feeding the liquid to be treated B again to the nanofiltration membrane unit A (2a), and feeding the permeated liquid C to the second tank 5b at a constant flow rate. At this time, the concentrated liquid D that has not permeated through the nanofiltration membrane unit A (2a) is mixed with a remaining portion of the liquid to be treated B in the first tank 5a. In addition, the second nanofiltration step can be performed while adding dilution water to the liquid to be treated B in the first tank 5a at the same flow rate as the flow rate of the permeated liquid C.

In FIG. 5 and FIG. 10, since the same nanofiltration membrane unit A (2a) as in the first nanofiltration step is used in the second nanofiltration step, it is preferable to clean the nanofiltration membrane unit A (2a), the first tank 5a, and the second tank 5b before performing the second nanofiltration step.

Further, in the example shown in FIG. 8, a remaining portion of a liquid to be treated B(k) remaining in the third tank 5c after a treatment on the k-th solution X(k) is added to the first tank 5a containing the p-th liquid to be treated A(p). In addition, in the example shown in FIG. 10, the remaining portion of the liquid to be treated B(k) remaining in the first tank 5a after a treatment on the k-th solution X(k) is added to the first tank 5a containing the m-th liquid to be treated A(m). Here, m means an integer of (k+1) or more and N or less, and p means an integer of (k+2) or more and N or less.

On the other hand, in the example shown in FIG. 2, the liquid that has permeated through the nanofiltration membrane unit A (2a) and stored in the second tank 5b is fed to a fifth tank 5e, then the liquid in the fifth tank 5e is fed to a first reverse osmosis membrane unit 3a in order to perform the reverse osmosis filtration step to be described later, and the obtained concentrated liquid is fed to a sixth tank 5f. The second nanofiltration step is performed by feeding the concentrated liquid stored in the sixth tank 5f to the third tank 5c, feeding the liquid in the third tank 5c as the liquid to be treated B to the nanofiltration membrane unit B (2b), feeding the permeated liquid C to the fourth tank 5d at a constant flow rate, mixing the concentrated liquid D with a remaining portion of the liquid to be treated B in the third tank 5c, and adding dilution water to the liquid to be treated B in the third tank 5c at the same flow rate as the flow rate of the permeated liquid C.

(3) Semi-batch Treatment Step

Since the liquid composition of the solution X may vary as described above, in the process of continuously feeding N (N: an integer of 2 or more) solutions X containing an alkali metal ion, it is very difficult to stabilize the liquid composition obtained in the treatment step using the nanofiltration membrane and maintain a predetermined lithium purity and recovery rate, and it is impossible in some cases. In addition, when a continuous process is to be implemented to eliminate such instability in the treatment process using the nanofiltration membrane and to enable high purity and high recovery rate of lithium, the number of stages for the nanofiltration membrane is excessive, which cause problems of a cost increase and further complication of the process. In a batch treatment process, after the treatment on the k-th (k: an integer of 1 or more and (N-1) or less) solution X(k) is ended, the treatment on the (k+1)th solution X(k+1), which is next thereto, is started, and there is a problem that the treatment time is long.

Therefore, in the method for recovering an alkali metal salt according to the present embodiment, it is preferable that a treatment for obtaining the permeated liquid C from the solution X through the step 1 and the step 2 is sequentially performed on N (N: an integer of 2 or more) solutions X, the nanofiltration membrane unit B is used in the step 2, and while performing the second nanofiltration step (step 2) after performing the first nanofiltration step (step 1) on a k-th solution X(k) (k: an integer of 1 or more and (N-1) or less) among the N solutions X, the first nanofiltration step (step 1) is performed at the same time on a (k+1)th solution X(k+1) among the N solutions X. In this way, by using a configuration of a semi-batch treatment step in which batch treatment steps in the steps 1 and 2 are performed by semi-continuously on a plurality of solutions, the alkali metal ion can be efficiently recovered.

In addition, in order to efficiently recover the alkali metal ion, it is preferable that the remaining portion of the liquid to be treated B(k) after the end of the second nanofiltration step on the solution X(k) is added to the solution X (m: an integer of (k+1) or more and N or less) or a liquid to be treated A(m), and the first nanofiltration step is performed on the solution X(m).

In this case, in the second nanofiltration step, an alkali metal recovery rate is preferably 50% or more and 95% or less, more preferably 60 or more and 90% or less, and still more preferably 70% or more and 85% or less.

In the second nanofiltration step, when the alkali metal recovery rate is 95% or less, permeation of the permeated liquid having a low alkali metal ratio in the late stage of the nanofiltration step can be prevented. For the purpose of preventing the permeation of the permeated liquid having a low alkali metal ratio in the late stage of the nanofiltration step, it is preferable not to add dilution water in the second nanofiltration step.

The remaining portion of the liquid to be treated B(k) is a liquid obtained by once filtering the solution X(k) through a nanofiltration membrane, and when the compositions of the solution X(m) and the solution X(k) do not greatly vary, the alkali metal ratio is higher than that of the solution X(m). Therefore, by adding the remaining portion of the liquid to be treated B(k) to the solution X(m) or the liquid to be treated A(m), a total amount of alkali metals in the remaining portion of the liquid to be treated B(k) can be recovered, and the alkali metal ratio in the solution X(m) is also increased, so that the alkali metal ratio in the permeated liquid obtained in the first nanofiltration step on the solution X(m) is also increased. That is, the purity and the recovery rate of the alkali metal are improved.

Since the remaining portion of liquid to be treated B(k) is a liquid that has undergone the ultrafiltration step, the remaining portion of liquid to be treated B(k) is more preferably added to the liquid to be treated A(m) after the ultrafiltration step than to the solution X(m) that has not undergone the ultrafiltration step, from the viewpoint of reducing the load of the ultrafiltration step.

Therefore, the method for recovering an alkali metal salt according to the present embodiment preferably includes the following step 4.

Step 4: a step of adding a remaining portion of a k-th liquid to be treated B(k) (k: an integer of 1 or more and (N-1) or less), which has been mixed with a k-th concentrated liquid D(k), to an m-th solution X(m) (m: an integer of (k+1) or more and N or less) or an m-th liquid to be treated A(m) after end of the step 2 on the k-th solution X(k) among N solutions X (N: an integer of 2 or more) when the N solutions X are present.

FIG. 10 is an example of performing the step 4, which includes a step of adding the remaining portion of the k-th liquid to be treated B(k), which has been mixed with the k-th concentrated liquid D(k), to the solution X (m: an integer of (k+1) or more and N or less) after the end of the step 2 on the solution X(k).

Further, when the step 4 is combined with the semi-batch treatment step to be the following step 5, the alkali metal salt can be recovered more efficiently.

Step 5: a step of adding the remaining portion of the k-th liquid to be treated B(k), which has been mixed with the k-th concentrated liquid D(k), to the solution X (p: an integer of (k+2) or more and N or less) or a p-th liquid to be treated A(p) after the end of the step 2 on the solution X(k).

FIG. 8 is an example of performing the step 5, which includes a step of adding the remaining portion of the k-th liquid to be treated B(k), which has been mixed with the k-th concentrated liquid D(k), to the solution X (p: an integer of (k+2) or more and N or less) after the end of the step 2 on the solution X(k).

In FIG. 1 to FIG. 3, FIG. 8, and FIG. 9, the solution in the first tank 5a is recovered to any tank at a stage where the treatment in the nanofiltration membrane unit A (2a) is ended for a liquid to be treated A(1) obtained by feeding a solution X(1) to the ultrafiltration membrane unit 1 to be described later and all the permeated liquid A(1) is fed to the second tank 5b. Thereafter, a solution X(2) is fed to the ultrafiltration membrane unit 1 to be described later to obtain a liquid to be treated A(2), which is then stored in the first tank 5a, and the steps are sequentially performed. The steps for a solution X(3) to a solution X(N) are performed in the same manner.

Note that, in the method for recovering an alkali metal salt according to the present embodiment, the steps 1 and 2 are preferably performed on all the N solutions containing an alkali metal ion, that is, the first solution X(1) to the N-th solution X(N). In addition, a step other than the steps 1 and 2 may be performed on the N solutions, and for example, the reverse osmosis filtration step (step 3) or the ultrafiltration step to be described later may be performed.

(4) Reverse Osmosis Filtration Step

The method for recovering an alkali metal salt according to the present embodiment preferably includes a reverse osmosis filtration step of concentrating at least one of the permeated liquid A obtained in the first nanofiltration step and the permeated liquid C obtained in the second nanofiltration step.

Among them, in the case where N solutions X are present, the method for recovering an alkali metal salt according to the present embodiment preferably further includes the following step 3.

Step 3: a reverse osmosis filtration step of concentrating at least one of a k-th permeated liquid A(k) and a k-th permeated liquid C(k) for at least one of the solutions X(k).

In the reverse osmosis filtration step, at least one of the permeated liquid A and the permeated liquid C is fed to the reverse osmosis membrane unit, and a concentrated liquid having a higher concentration of the alkali metal ion than that of the fed permeated liquid A or permeated liquid C and a permeated liquid having a lower concentration of the alkali metal ion than that of the permeated liquid A and the permeated liquid C are obtained.

An operation control method in the reverse osmosis filtration step includes, for example, constant flow rate filtration and low pressure filtration.

In the case of constant flow rate filtration, the permeated liquid flow rate is preferably 1% or more of the amount of the permeated liquid A obtained in the first nanofiltration step or the amount of the permeated liquid C obtained in the second nanofiltration step per minute from the viewpoint of $Li^+$ recovery efficiency, and is preferably 50% or less of the amount of the permeated liquid A obtained in the first nanofiltration step or the amount of the permeated liquid C obtained in the second nanofiltration step per minute from the viewpoint of ease of control.

(4-1) Reverse Osmosis Membrane

In the reverse osmosis filtration step, any reverse osmosis membrane through which the alkali metal ion does not permeate may be used. By using such a reverse osmosis membrane, a loss of the lithium ion in the process of concentrating the alkali metal ion, particularly the lithium ion, is extremely small, and the lithium ion is stably recovered with high efficiency. The higher the ion removal rate of the reverse osmosis membrane, the better the efficiency of the process, but since a membrane having a high removal rate generally has poor water permeability, it is preferable to select the membrane in consideration of the balance.

In particular, in the case where the solution X contains a neutral molecule having no charge under a condition of a pH of 3 or less, such as a boron compound represented by boric acid, the neutral molecule is not removed in the nanofiltration step and is also contained in the permeated liquid A and the permeated liquid C obtained in the nanofiltration step. Therefore, it is preferable to remove the neutral molecule while concentrating the alkali metal ion by the reverse osmosis filtration step. That is, it is preferable that the reverse osmosis membrane does not permeate the alkali metal ion but permeates the neutral molecule. In particular, a low-removal reverse osmosis membrane in which an isopropyl alcohol removal rate when an isopropyl alcohol aqueous solution having a temperature of 25°C and a pH of 6.5 is permeated at an operating pressure of 0.5 MPa is 70% or more and less than 85% is preferred from the viewpoint of not permeating the alkali metal ion but permeating the neutral molecule. Here, the low-removal reverse osmosis membrane concentrates at least one of the permeated liquid A(k) and the permeated liquid C(k), at least one of the permeated liquid A(k) and the permeated liquid C(k) contains a neutral molecule having no charge under a condition of a pH of 3 or less, and the low-removal reverse osmosis membrane is a reverse osmosis filtration membrane used in the reverse osmosis filtration step.

Examples of a material of the reverse osmosis membrane include a polymer such as a cellulose acetate-based polymer, a polyamide, a sulfonated polysulfone, a poly acrylonitrile, a polyester, polyimide, or a vinyl polymer. The reverse osmosis membrane may be composed of only one material or may be composed of a plurality of materials. In addition, a structure of the membrane may be an asymmetric membrane having a dense layer on at least one surface of the membrane and fine pores having a gradually large pore diameter from the dense layer toward the inside of the membrane or the other surface, or a composite semipermeable membrane having a very thin separation functional layer formed of another material on the dense layer of the asymmetric membrane.

Specific examples of the composite semipermeable membrane used as the reverse osmosis membrane include a composite semipermeable membrane including a substrate, a porous support membrane, and a separation functional layer. Among them, a composite semipermeable membrane containing a polyamide in a separation functional layer is preferred. The separation functional layer containing a polyamide is obtained by polycondensing a polyfunctional amine and a polyfunctional acid halide on a porous support membrane.

(4-2) Concentration Using Reverse Osmosis Membrane

In the method for recovering an alkali metal salt according to the present embodiment, the reverse osmosis filtration step is preferably performed at least once on at least one of the permeated liquid A and the permeated liquid C obtained in the nanofiltration step. That is, the reverse osmosis filtration step is preferably performed at least once on at least one of the k-th permeated liquid A(k) obtained in the first nanofiltration step (step 1) and the k-th permeated liquid C(k) obtained in the second nanofiltration step (step 2) for the solution X(k).

Regarding the number of times of the reverse osmosis filtration step, it is more preferable to perform the reverse osmosis filtration step only once on the permeated liquid C(k) obtained in the second nanofiltration step for the solution X(k), from the viewpoint of shortening the time of the entire process. Note that, in the case of performing the second nanofiltration step a plurality of times, it is preferable to perform the reverse osmosis filtration step only once on the permeated liquid C(k) obtained in the last second nanofiltration step.

As described above, in the case where the solution X contains the neutral molecule having no charge under a condition of a pH of 3 or less, such as a boron compound represented by boric acid, it is preferable to concentrate the alkali metal ion while removing the neutral molecules using a low-removal reverse osmosis membrane. At this time, the reverse osmosis filtration step preferably includes a circulation step of mixing the concentrated liquid obtained in the reverse osmosis filtration step with a solution to be supplied to the reverse osmosis filtration step, from the viewpoint of concentrating the alkali metal ion while efficiently removing the neutral molecule. In the case where the circulation step is provided, in the period for performing the circulation step, a withstand pressure value is preferably within a range up to 90% of a withstand pressure value of the reverse osmosis membrane unit from the viewpoint of the operating pressure.

In the above case, since the permeated liquid of the low-removal reverse osmosis membrane contains a neutral molecule, it is not suitable to use the permeated liquid as dilution water for diluting the liquid to be treated A or the liquid to be treated B in the nanofiltration step. A concentration of the neutral molecule in the dilution water is preferably 1% or less, more preferably 0.1% or less, and still more preferably 0.01% or less of a concentration (mg/L) of the neutral molecule in the liquid to be treated. When the concentration is 1% or less of the concentration (mg/L) of the neutral molecule in the liquid to be treated, it is possible to significantly prevent accumulation of the neutral molecule in the system when the liquid to be treated is subjected to the semi-batch treatment step using, as the dilution water, the permeated liquid of the low-removal reverse osmosis membrane. In the case where the permeated liquid of the low-removal reverse osmosis membrane is used as dilution water, it is preferable to feed the permeated liquid of the low-removal reverse osmosis membrane to a high-removal reverse osmosis membrane unit equipped with a high-removal reverse osmosis membrane defined below to remove the neutral molecule. By permeating through the high-removal reverse osmosis membrane, the concentration of the neutral molecule in the permeated liquid of the low-removal reverse osmosis membrane can be set to a range suitable for the above dilution water.

The "high-removal reverse osmosis membrane" means a reverse osmosis membrane having an isopropyl alcohol removal rate of 85% to 95% when an isopropyl alcohol aqueous solution having a temperature of 25°C and a pH of 6.5 is permeated at an operating pressure of 0.5 MPa.

The examples shown in FIG. 1, FIG. 5, FIG. 8, and FIG. 10 are flowcharts each showing an alkali metal salt recovery process including a reverse osmosis filtration step of concentrating the permeated liquid C and a dilution step of using the permeated liquid obtained in the reverse osmosis filtration step as dilution water for diluting the liquid to be treated A. Specifically, the permeated liquid C that has permeated through the nanofiltration membrane unit B (2b) or the nanofiltration membrane unit A (2a) and is stored in the fourth tank 5d or the second tank 5b is fed to the fifth tank 5e or the third tank 5c, and the liquid in the fifth tank 5e or the third tank 5c is fed to the first reverse osmosis membrane unit 3a to be subjected to the reverse osmosis filtration step. The obtained permeated liquid is fed as dilution water for diluting the liquid to be treated A in the first tank 5a, and the concentrated liquid is fed to the sixth tank 5f. The liquid in the sixth tank 5f can be recovered in any tank.

The example shown in FIG. 9 is a flowchart showing an alkali metal salt recovery process including a reverse osmosis filtration step of concentrating the permeated liquid C, and a dilution step of treating the permeated liquid obtained in the reverse osmosis filtration step with a high-removal reverse osmosis membrane and then using the obtained permeated liquid as dilution water for diluting the liquid to be treated A. Specifically, the permeated liquid C that has permeated through the nanofiltration membrane unit B (2b) and is stored in the fourth tank 5d is fed to the fifth tank 5e, and the liquid in the fifth tank 5e is fed to the first reverse osmosis membrane unit 3a to be subjected to the reverse osmosis filtration step. The concentrated liquid obtained in the reverse osmosis filtration step is fed to the sixth tank 5f. The liquid in the sixth tank 5f can be recovered in any tank. Further, the permeated liquid obtained in the reverse osmosis filtration step is fed to the high-removal reverse osmosis membrane unit 4, the concentrated liquid obtained in the high-removal reverse osmosis membrane unit 4 is discharged, and the obtained permeated liquid may be supplied to the first tank 5a and used as dilution water for diluting the liquid to be treated A.

The example shown in FIG. 3 is a flowchart showing an alkali metal salt recovery process in which a reverse osmosis filtration step of concentrating the permeated liquid C includes a step of circulating the concentrated liquid, and a dilution step of treating the permeated liquid obtained in the reverse osmosis filtration step with a high-removal reverse osmosis membrane and then using the obtained permeated liquid as dilution water for diluting the liquid to be treated A is included. Specifically, the permeated liquid C that has permeated through the nanofiltration membrane unit B (2b) and is stored in the fourth tank 5d is fed to the fifth tank 5e, and the liquid in the fifth tank 5e is fed to the first reverse osmosis membrane unit 3a to be subjected to the reverse osmosis filtration step while being mixed, in the fifth tank 5e, with the concentrated liquid obtained in the first reverse osmosis membrane unit 3a. Further, the permeated liquid obtained in the reverse osmosis filtration step is fed to the high-removal reverse osmosis membrane unit 4, the concentrated liquid obtained in the high-removal reverse osmosis membrane unit 4 is discharged, and the obtained permeated liquid may be supplied to the first tank 5a and used as dilution water for diluting the liquid to be treated A. After the end of the reverse osmosis filtration step, the liquid in the fifth tank 5e, which is the concentrated liquid of the permeated liquid C, may be recovered in any tank.

The example shown in FIG. 2 is a flowchart showing an alkali metal salt recovery process including a reverse osmosis filtration step of concentrating the permeated liquid A, a reverse osmosis filtration step of concentrating the permeated liquid C, and a dilution step of using the permeated liquid obtained in each reverse osmosis filtration step as dilution water for diluting the liquid to be treated A. Specifically, first, the liquid in the second tank 5b that has permeated through the nanofiltration membrane unit A (2a) is fed to the fifth tank 5e. The liquid in the fifth tank 5e is fed to the first reverse osmosis membrane unit 3a, the obtained concentrated liquid is fed to the sixth tank 5f, and the permeated liquid is added as dilution water to the liquid to be treated A. Next, the liquid in the sixth tank 5f is fed to the third tank 5c. The liquid in the third tank 5c is fed as the liquid to be treated B to the nanofiltration membrane unit B (2b), and the permeated liquid C stored in the fourth tank 5d is fed to a seventh tank 5g. The liquid in the seventh tank 5g is fed to a second reverse osmosis membrane unit 3b, the obtained concentrated liquid is fed to an eighth tank 5h, and the permeated liquid is added as dilution water to the liquid to be treated A. The liquid in the eighth tank 5h can be recovered in any tank.

(5) Ultrafiltration Step

The solution X(k) may be subjected to ultrafiltration before the first nanofiltration step. High molecular weight organic substances can be removed by ultrafiltration, and fouling of the nanofiltration membrane can be prevented by removing the high molecular weight organic substances.

In the case of mixing a plurality of solutions to obtain the solution X(k), ultrafiltration may be performed on each of the plurality of solutions. The permeated liquid in the ultrafiltration membrane unit is used as the liquid to be treated A(k) in the first nanofiltration step.

In FIG. 1 to FIG. 3, the solution X(k) is fed to the ultrafiltration membrane unit 1, and the permeated liquid is fed to the first tank 5a.

(6) Recovery Step

In this step, the alkali metal salt is recovered from the permeated liquid C containing an alkali metal ion obtained in the second nanofiltration step or a concentrated liquid of the permeated liquid C obtained through the reverse osmosis filtration step. The recovery step preferably includes concentrating an alkali metal salt aqueous solution.

The recovery of the alkali metal salt can be performed by a known method, and for example, in the case where the alkali metal salt is a potassium salt, the recovery is performed by utilizing temperature dependence of solubility or adding a poor solvent such as ethanol.

The lithium salt has solubility lower than that of other alkali metal salts. For example, sodium carbonate and potassium carbonate have high solubility in water (20 g or more with respect to 100 mL of water), but only 1.33 g of lithium carbonate is dissolved in 100 mL of water at 25°C. Therefore, lithium can be recovered as lithium carbonate by adding a carbonate to the permeated liquid C containing an alkali metal ion or the concentrated liquid of the permeated liquid C. Since the solubility of lithium carbonate further decreases at a high temperature, the aqueous solution may be heated.

(7) Comparative Embodiment

FIG. 4, FIG. 6, and FIG. 7 are schematic flowcharts each showing an alkali metal salt recovery process in comparative embodiments.

The process configuration in FIG. 4 is the same as the process configuration in FIG. 1 except that the concentrated liquid B in the nanofiltration membrane unit A (2a) and the concentrated liquid D in the nanofiltration membrane unit B (2b) are discharged without being mixed with the liquids in the first tank 5a and the third tank 5c, respectively. In the case of the above process, there is a problem that the Li$^+$ recovery rate decreases.

The process configuration in FIG. 6 is the same as the example shown in FIG. 1 except that the third tank 5c, the nanofiltration membrane unit B (2b), and the fourth tank 5d are not provided, that is, the second nanofiltration step is not provided, and the liquid in the second tank 5b is fed to the fifth tank 5e. The above process has a problem that the Li$^+$ purity of the recovered liquid is low.

The process configuration in FIG. 7 is a continuous treatment process, in which the solution X(1) is fed to the ultrafiltration membrane unit 1, and the permeated liquid in the ultrafiltration membrane unit 1 is fed to the nanofiltration membrane unit A (2a) while being mixed with dilution water. The permeated liquid A in the nanofiltration membrane unit A (2a) is fed to the nanofiltration membrane unit B (2b), and the concentrated liquid B in the nanofiltration membrane unit A (2a) is recovered to the first tank 5a. The permeated liquid C in the nanofiltration membrane unit B (2b) is fed to the first reverse osmosis membrane unit 3a, and the concentrated liquid D in the nanofiltration membrane unit B (2b) is mixed with the concentrated liquid B in the nanofiltration membrane unit A (2a) and fed to the first tank 5a. The concentrated liquid in the first reverse osmosis membrane unit 3a is fed to the fifth tank 5e. The permeated liquid in the first reverse osmosis membrane unit 3a is used as a part of dilution water. After the entire amount of the solution X(1) is treated, the solution X(2) and the solution X(3) are sequentially treated in the same procedure. In the case of the above process, there is a problem that the Li$^+$ recovery rate decreases.

(8) Apparatus for Recovering Alkali Metal Salt

An apparatus for recovering an alkali metal salt according to the present invention includes:

a first separation unit configured to separate a solution containing an alkali metal ion as a liquid to be treated A into a permeated liquid A and a concentrated liquid B using a first nanofiltration membrane unit;
a first circulation unit configured to mix the concentrated liquid B with a remaining portion of the liquid to be treated A;
a second separation unit configured to separate the permeated liquid A or a concentrated liquid of the permeated liquid A as a liquid to be treated B into a permeated liquid C and a concentrated liquid D using a second nanofiltration membrane unit;
a second circulation unit configured to mix the concentrated liquid D with a remaining portion of the liquid to be treated B;
a dilution unit configured to add dilution water to at least one of the liquid to be treated A and the liquid to be treated B;
a flow rate control unit configured to control flow rates of the permeated liquid A and the concentrated liquid B in the first separation unit and flow rates of the permeated liquid C and the concentrated liquid D in the second separation unit; and
a flow rate control unit configured to synchronize, in the dilution unit, an addition flow rate of the dilution water and a permeated liquid flow rate when the liquid to be treated, to which the dilution water has been added, is fed to the nanofiltration membrane unit.

An apparatus for recovering an alkali metal salt according to the present invention may include:

a first separation device, a first circulation facility, a second separation facility, a second circulation facility, a dilution facility, a flow rate control facility a, and a flow rate control facility b, in which
the first separation facility includes a first nanofiltration membrane unit, and in the first separation facility, a liquid to be treated A, which is a solution containing an alkali metal ion, is separated into a permeated liquid A and a concentrated liquid B by the first nanofiltration membrane unit,
in the first circulation facility, the concentrated liquid B is mixed with a remaining portion of the liquid to be treated A,
in the second separation facility, the permeated liquid A or a concentrated liquid of the permeated liquid A, as a liquid to be treated B, is separated into a permeated liquid C and a concentrated liquid D by a second nanofiltration membrane unit,
in the second circulation facility, the concentrated liquid D is mixed with a remaining portion of the liquid to be treated B,
in the dilution facility, dilution water is added to at least one of the liquid to be treated A and the liquid to be treated B,
in the flow rate control facility a, flow rates of the permeated liquid A and the concentrated liquid B in the first separation device, and flow rates of the permeated liquid C and the concentrated liquid D in the second separation device are controlled, and
in the flow rate control facility b, a flow rate of dilution water added in the dilution unit is synchronized with a flow rate of the permeated liquid when the liquid to be treated, to which the dilution water has been added, is fed to the nanofiltration membrane unit.

In the first separation facility and the second separation facility, it is preferable that the nanofiltration membrane unit includes a pressure vessel filled with a spiral element of the nanofiltration membrane, and has a structure capable of supplying a solution containing an alkali metal ion to the vessel by a high-pressure pump. In the nanofiltration membrane unit, a plurality of vessels may be connected in parallel or in series, and a plurality of nanofiltration membrane elements may be filled in each vessel. The spiral element of the nanofiltration membrane may have any diameter and length. The size of the spiral element of the nanofiltration membrane varies depending on the membrane area, and with the same membrane type, a larger amount of liquid can be treated per unit time as the membrane area increases. The size and number of spiral elements of the nanofiltration membrane can be freely determined according to the scale of the liquid to be treated A.

The flow rate control facility a preferably has an instrument (flowmeter) capable of measuring the flow rates of the permeated liquid and the concentrated liquid in the nanofiltration membrane unit in order to keep the flow rates of the permeated liquid and the concentrated liquid in the nanofiltration membrane unit constant. In the flow rate control for the permeated liquid, it is preferable that the high-pressure pump has a mechanism that receives data of a permeated liquid flowmeter at any time and can control an output of the high-pressure pump such that the flow rate of the permeated liquid is constant. In the flow rate control for the concentrated liquid, an electromagnetic valve is preferably provided near a concentrated liquid flowmeter, and the electromagnetic valve preferably has a mechanism that receives data of the concentrated liquid flowmeter at any time and can control the flow rate of the concentrated liquid to be constant.

It is preferable that the first circulation facility and the second circulation facility include a tank (raw water tank) for containing the liquid to be treated, and a pipe for circulating the concentrated liquid discharged from the nanofiltration membrane unit to the raw water tank.

The dilution facility preferably includes a tank (dilution water tank) for containing dilution water. A pump (dilution water feed pump) for feeding the dilution water from the dilution water tank to the raw water tank is preferably provided.

As the flow rate control facility b, it is preferable that the dilution water feed pump has a mechanism that receives data of the permeated liquid flowmeter at any time and feeds the dilution water at a flow rate same as the flow rate of the permeated liquid.

The above facilities are preferably made of a material resistant to the liquid property of the liquid to be treated and resistant to the operating pressure.

In the recovery apparatus according to the present invention, in order to achieve recovery of the alkali metal salt, in addition to the above, a pump, a pipe, a valve, a tank, a vessel, a temperature control device, an instrument (such as a pH meter, an electric conductivity meter, a flowmeter, or a pressure gauge), and the like can be selected and freely combined.

Examples

Hereinafter, the present invention will be described with reference to examples, but the present invention is not limited to these examples. Measurements of Examples and Comparative Examples were performed as follows.

<Performance of Nanofiltration Membrane and Reverse Osmosis Membrane>

(Glucose Removal Rate and Isopropyl Alcohol Removal Rate Using Nanofiltration Membrane)

The isopropyl alcohol removal rate and the glucose removal rate were calculated based on concentrations of glucose in a permeated liquid and feed water when a 1,000 mg/L glucose aqueous solution having a temperature of 25°C and a pH of 6.5 as the feed water was permeated through the nanofiltration membrane at an operating pressure of 0.5 MPa, and concentrations of isopropyl alcohol in a permeated liquid and feed water when a 1,000 mg/L isopropyl alcohol aqueous solution having a temperature of 25°C and a pH of 6.5 as the feed water was permeated through the nanofiltration membrane at an operating pressure of 0.5 MPa, according to the following equations.

Isopropyl alcohol removal rate (%) = 100 × (1 - (concentration of isopropyl alcohol in permeated liquid/concentration of isopropyl alcohol in feed water)) Glucose removal rate (%) = 100 × (1- (concentration of glucose in permeated liquid/concentration of glucose in feed water))

Note that, the concentration of isopropyl alcohol was determined using a gas chromatograph (GC-18A manufactured by Shimadzu Corporation), and the concentration of glucose was determined using a refractometer (RID-6A manufactured by Shimadzu Corporation).

(Magnesium Sulfate Removal Rate and Magnesium Chloride Removal Rate Using Nanofiltration Membrane)

A $MgSO_4$ removal rate and a $MgCl_2$ removal rate were calculated based on concentrations of magnesium sulfate in a permeated liquid and feed water when a 2,000 mg/L magnesium sulfate (hereinafter, also referred to as "$MgSO_4$") aqueous solution having a temperature of 25°C and a pH of 6.5 as the feed water was permeated through the nanofiltration membrane at an operating pressure of 0.5 MPa, and concentrations of magnesium chloride in a permeated liquid and feed water when a 2,000 mg/L magnesium chloride (hereinafter, also referred to as "$MgCl_2$") aqueous solution having a temperature of 25°C and a pH of 6.5 was permeated through the nanofiltration membrane at an operating pressure of 0.5 MPa, according to the following equations.

As the concentration of magnesium sulfate and the concentration of magnesium chloride, electric conductivities of the feed water and the permeated liquid were measured by using an electric conductivity meter manufactured by DKK-TOA CORPORATION, and the respective practical salts, that is, the concentration of $MgSO_4$ and the concentration of $MgCl_2$ were obtained.

$MgSO_4$ removal rate (%) = 100 $\times$ {1 - (concentration of $MgSO_4$ in permeated liquid/concentration of $MgSO_4$ in feed water)}

$MgC_2$ removal rate (%) = 100 $\times$ {1- (concentration of $MgCl_2$ in permeated liquid/concentration of $MgC_2$ in feed water)}

(Positron Annihilation Lifetime Measurement Method Using Positron Beam Method)

Average pore diameters of a nanofiltration membrane A and a nanofiltration membrane B to be described later were derived.

The positron annihilation lifetime measurement for the separation functional layer was performed using a positron beam method as follows. A composite semipermeable membrane was freeze-dried at -30°C under a reduced pressure and cut into 1.5 cm $\times$ 1.5 cm square to give a test sample. In a thin membrane corresponding positron annihilation lifetime measurement device equipped with a positron beam generator (this device was described in detail in, for example, Radiation Physics and Chemistry, 58, 603, Pergamon (2000)), a separation functional layer side of the test sample was measured with a total count number of 5,000,000 by using a scintillation counter made of barium difluoride using a photomultiplier tube under a beam intensity of 0.1 keV and 0.5 keV and a room temperature vacuum, and the analysis was performed by using POSITRONFIT. Based on an average lifetime $\tau$ of a third component obtained by the analysis, the average pore diameter when a beam intensity was 0.1 keV was derived as R1 and the average pore diameter when the beam intensity was 0.5 keV was derived as R2 using the Tao-Eldrup equation, and R1/R2 was calculated. The obtained value is defined as a "pore diameter distribution".

(Solution X)

Lithium sulfate, nickel sulfate, cobalt sulfate, and manganese sulfate were dissolved in water so as to have concentrations of $Li^+$, $Ni^{2+}$, $Co^{2+}$, and $Mn^{2+}$ in a rare metal-containing acidic aqueous solution A described in Table 1 in Patent Literature 2, and the pH was adjusted to 1 using sulfuric acid. Further, the aqueous solution was diluted 1.2 times with a sulfuric acid aqueous solution having a pH of 1 to prepare a solution Xa (No. 1).

A solution was prepared in the same manner as for the solution Xa (No. 1) except that the $Li^+$ concentration was changed to 1/2, to prepare a solution Xa (No. 2).

A solution was prepared in the same manner as for the solution Xa (No. 1) except that the $Li^+$ concentration was changed to 1/4, to prepare a solution Xa (No. 3).

Solutions Xb (Nos. 1 to 3) were prepared in the same manner as for the solutions Xa (Nos. 1 to 3) except that the pH was adjusted to 3.7.

Solutions Xc (Nos. 1 to 3) were prepared in the same manner as for the solutions Xa (Nos. 1 to 3) except that boric acid was added to the solution and the concentration of boron was set to 50 mg/L.

With respect to the solutions obtained above, various ion concentrations were quantified using a P-4010 type ICP (high-frequency inductively coupled plasma emission spectrometry) device manufactured by Hitachi, Ltd. The results are shown in Table 1.

Note that, the liquid amount in Nos. 1 to 3 constituting each of the solution Xa, the solution Xb, and the solution Xc was 1,000 L.

Table 1

|  |  |  | pH | Li | Ni | Co | Mn | B |
|---|---|---|---|---|---|---|---|---|
|  | Category | No. | - | mg/L | mg/L | mg/L | mg/L | mg/L |
| Solution X | a | 1 | 1.0 | 5,492 | 13,750 | 4,583 | 2,833 | 0 |
|  |  | 2 | 1.0 | 2,746 | 13,750 | 4,583 | 2,833 | 0 |
|  |  | 3 | 1.0 | 1,373 | 13,750 | 4,583 | 2,833 | 0 |
|  | b | 1 | 3.7 | 5,492 | 13,750 | 4,583 | 2,833 | 0 |
|  |  | 2 | 3.7 | 2,746 | 13,750 | 4,583 | 2,833 | 0 |
|  |  | 3 | 3.7 | 1,373 | 13,750 | 4,583 | 2,833 | 0 |
|  | c | 1 | 1.0 | 5,492 | 13,750 | 4,583 | 2,833 | 50 |
|  |  | 2 | 1.0 | 2,746 | 13,750 | 4,583 | 2,833 | 50 |
|  |  | 3 | 1.0 | 1,373 | 13,750 | 4,583 | 2,833 | 50 |

<Preparation of Nanofiltration Membrane and Reverse Osmosis Membrane>

(Nanofiltration Membrane A)

A 18.0 mass% dimethylformamide (DMF) solution of polysulfone was cast at a thickness of 180 $\mu$m at room temperature (25°C) onto a nonwoven fabric (air permeability: 1 cc/cm$^2$/s) made of a polyester fiber, immediately immersed in pure water, and left to stand for 5 minutes to prepare a porous support membrane (thickness: 160 $\mu$m) made of a fiber-reinforced polysulfone.

Next, a membrane surface temperature of the porous support membrane was adjusted to 25°C while blowing air adjusted to 25°C to the porous support membrane to remove excess moisture. The surface of the porous support membrane was coated with an aqueous solution at 30°C in which 2.0 mass% of piperazine, 250 ppm of sodium dodecyl diphenyl ether disulfonate, and 1.0 mass% of trisodium phosphate were dissolved, and was allowed to stand for 15 seconds, and then nitrogen was blown from an air nozzle to remove excess aqueous solution, to thereby form a coating layer of an amine aqueous solution on the porous support membrane. Further, the entire surface of the porous support membrane was uniformly coated with an n-decane solution at 38°C containing 0.2 mass% of trimesoyl chloride (hereinafter, referred to as "TMC"), and then allowed to stand at a relative humidity of 70% and a temperature of 25°C for 1 minute to perform interfacial polycondensation, and two fluids (pure water and air) were blown onto the membrane surface to remove the solution on the surface. Thereafter, the membrane was washed with pure water at 80°C to obtain the nanofiltration membrane A.

(Nanofiltration Membrane B)

The nanofiltration membrane B was obtained by preparing a nanofiltration membrane in the same manner as in the nanofiltration membrane A, except that 2,5-dimethylpiperazine was used as piperazine, and the entire surface of the porous support membrane was uniformly coated with an n-decane solution at 38°C containing 0.2 mass% of TMC and then allowed to stand at a relative humidity of 80% and 25°C for 1 minute.

(Nanofiltration Membrane E)

SelRO (registered trademark) MPS-34 manufactured by KOCH Industries, Inc. was used as a nanofiltration membrane E.
Table 2 shows the membrane performance of the nanofiltration membrane A, the nanofiltration membrane B, and the nanofiltration membrane E.
Each of the nanofiltration membrane A, the nanofiltration membrane B, and the nanofiltration membrane E was spirally wound by any method and used as a membrane element having a diameter of 20.32 cm and a length of 102 cm (hereinafter, referred to as an "8 inch element").

Table 2

| | Glucose removal rate | Isopropyl alcohol removal rate | MgCl$_2$ removal rate | MgSO$_4$ removal rate | Relative humidity (%) | Polyfunctional aliphatic amine | R1 | Pore diameter distribution R1/R2 |
|---|---|---|---|---|---|---|---|---|
| | (%) | (%) | (%) | (%) | (%) | | (nm) | |
| Nanofiltration membrane A | 96.1 | 40.7 | 86.2 | 99.8 | 70 | Piperazine | 0.50 | 0.82 |
| Nanofiltration membrane B | 81.0 | 26.1 | 86.7 | 99.6 | 80 | 2,5-Dimethylpiperazine | 0.58 | 0.94 |
| Nanofiltration membrane E | 85.7 | 38.0 | 90.4 | 92.4 | - | - | - | - |

(Reverse Osmosis Membrane C)

A porous support membrane was prepared in the same method as that for the nanofiltration membrane A, and the membrane surface temperature of the porous support membrane was adjusted to 25°C while blowing air adjusted to 25°C to remove excess moisture. After immersion in an aqueous solution in which 5.0 mass% of m-phenylenediamine (hereinafter, referred to as "m-PDA") was dissolved for 15 seconds, nitrogen was blown from an air nozzle to remove an excess aqueous solution, the entire surface of the porous support membrane was uniformly coated with an n-decane solution at 30°C containing 0.18 mass% of TMC and then allowed to stand at 30°C for 1 minute, and two fluids (pure water and air) were blown onto the membrane surface to remove the solution on the surface. Thereafter, the reverse osmosis membrane was washed with pure water at 80°C to obtain a reverse osmosis membrane C.

(Reverse Osmosis Membrane D)

A reverse osmosis membrane D was prepared in the same method as that for the reverse osmosis membrane C except that m-PDA was changed to 1.8 mass% and TMC was changed to 0.07 mass%.
Table 3 shows the membrane performance of the reverse osmosis membrane C and the reverse osmosis membrane D.
Each of the reverse osmosis membrane C and the reverse osmosis membrane D was spirally wound by any method and used as an 8 inch element.

Table 3

| | Isopropyl alcohol removal rate |
|---|---|
| | (%) |
| Reverse osmosis membrane C | 89.0 |
| Reverse osmosis membrane D | 75.2 |

As seen from the results of Table 3, the reverse osmosis membrane C is a high-removal reverse osmosis membrane and the reverse osmosis membrane D is a low-removal reverse osmosis membrane.

<Evaluation of Recovery of Alkali Metal Salt>

(Alkali Metal Ion Ratio)

The alkali metal ion ratio was calculated according to the following equation using various ion concentrations in the solution.

Alkali metal ion ratio = concentration of lithium ion/(concentration of cobalt ion + concentration of nickel ion + concentration of manganese ion)

(Li+ Recovery Rate)

The Li+ recovery rate was calculated according to the following equation.

Li+ recovery rate (%) = {(amount (L) of liquid finally concentrated in reverse osmosis membrane unit) × (Li+ concentration (mg/L) in liquid finally concentrated in reverse osmosis membrane unit)}/{(initial amount (L) of solution X) × (Li+ concentration (mg/L) in initial solution X)}

Note that, in the solution X(k), in the case of recovering the remaining portion of the liquid to be treated B(k) in the second nanofiltration step, Li+ contained in the remaining portion of the liquid to be treated B(k) was recovered by adding the remaining portion to the liquid to be treated A(m) (m: an integer of (k+1) or more and N or less) or the liquid to be treated A(p) (p: an integer of (k+2) or more and N or less), so that Li+ was considered to have been recovered and the Li+ recovery rate (k) in the solution X(k) was calculated according to the following equation. In Example 9, the following equation was used, and when the number of solutions N = 3, Li+ contained in the remaining portion of the liquid to be treated B(k) in the second nanofiltration step was also considered to be recovered for k = 2, 3.

Li+ recovery rate (k) (%) = {(amount (L) of liquid finally concentrated in reverse osmosis membrane unit in treatment on solution X(k)) × (Li+ concentration (mg/L) in liquid finally concentrated in reverse osmosis membrane unit in treatment on solution X(k)) + (amount (L) of remaining portion of liquid to be treated B(k) in second nanofiltration step) × (Li+ concentration (mg/L) in remaining portion of liquid to be treated B(k) in second nanofiltration step)}/{(initial amount (L) of solution X(k)) × (Li+ concentration (mg/L) in initial solution X(k)) + (amount (L) of remaining portion of liquid to be treated B (k-1: k ≥ 2) in second nanofiltration step added to solution X(k)) × ((Li+ concentration (mg/L) in remaining portion of liquid to be treated B (k-1: k ≥ 2) in second nanofiltration step added to solution X(k))}

(Li+ Purity)

The Li+ purity was defined as the alkali metal ion ratio in the liquid finally concentrated in the reverse osmosis membrane unit.

(Boron Concentration Ratio)

The boron concentration ratio was defined as a ratio of the concentration of boron to the concentration of the lithium ion in the liquid finally concentrated in the reverse osmosis membrane unit.

(Total Treatment Time)

The total treatment time was defined as a total time required to complete the treatment on the solutions X (Nos. 1 to 3).

(Example 1)

In the process configuration shown in FIG. 1, the nanofiltration membrane A was used as the nanofiltration membranes of the nanofiltration membrane unit A (2a) and the nanofiltration membrane unit B (2b), the reverse osmosis membrane C was used as the reverse osmosis membrane of the first reverse osmosis membrane unit 3a, a semi-batch treatment step was performed on the solutions Xa in the order of Nos. 1 to 3, and the alkali metal salt was recovered. Note that, the withstand pressure value of the first reverse osmosis membrane unit 3a was 8 MPa. The nanofiltration step was performed by constant flow rate filtration at a permeated liquid flow rate of 60 L/min. The alkali metal ion recovery rate in the nanofiltration step was checked by monitoring the operating pressure using the equation (2), the filtration was continued until the alkali metal ion recovery rate reached 93% in the first nanofiltration step and the alkali metal ion recovery rate reached 96% in the second nanofiltration step, and the reverse osmosis filtration step was performed by constant flow rate filtration at a permeated liquid flow rate of 60 L/min and continued until the operating pressure reached 7 MPa. Note that, each of the nanofiltration membrane unit and the reverse osmosis membrane unit was used by connecting four 8 inch elements in series.

The results of this process are shown in Table 4.

(Example 2)

The alkali metal salt recovery process was performed in the same manner as in Example 1 except that the solutions Xb (Nos. 1 to 3) were used instead of the solutions Xa.

The results of this process are shown in Table 4. In the case where the pH is as high as 3.7, the permeability of the alkali metal ion is lowered and the total treatment time is increased as compared with Example 1 in which the pH is 1.0, but the lithium ion can be recovered with a high purity and a high recovery rate.

(Example 3)

In the process configuration shown in FIG. 2, the nanofiltration membrane A was used as the nanofiltration membranes of the nanofiltration membrane unit A (2a) and the nanofiltration membrane unit B (2b), the reverse osmosis membrane C was used as the reverse osmosis membranes of the first reverse osmosis membrane unit 3a and the second reverse osmosis membrane unit 3b, and a semi-batch treatment step was performed on the solutions Xa in the order of Nos. 1 to 3 to perform an alkali metal salt recovery process. Note that, the withstand pressure value of the second reverse osmosis membrane unit 3b was 8 MPa. The nanofiltration step was performed by constant flow rate filtration at a permeated liquid flow rate of 60 L/min. The alkali metal ion recovery rate in the first nanofiltration step and the second nanofiltration step was checked by monitoring the operating pressure using the equation (2), and the filtration was continued until the alkali metal ion recovery rate reached 93% in the first nanofiltration step and the alkali metal ion recovery rate reached 96% in the second nanofiltration step. The reverse osmosis filtration step was performed by constant flow rate filtration at a permeated liquid flow rate of 15 L/min and continued until the operating pressure reached 7 MPa. Note that, each of the nanofiltration membrane unit and the reverse osmosis membrane unit was used by connecting four 8 inch elements in series.

The results of this process are shown in Table 4. When the concentration is performed using the reverse osmosis membrane unit each time after the nanofiltration step, the total treatment time is slightly increased as compared with the case where the RO concentration is performed only once after the nanofiltration step at the second stage, but the lithium ion can be recovered with a high purity and a high recovery rate.

(Example 4)

An alkali metal salt recovery process was performed in the same manner as in Example 1 except that the nanofiltration membrane B was used.

The results of this process are shown in Table 4. It can be seen that in the case where the nanofiltration membrane B satisfying the predetermined performance is used, the purity and the recovery rate are improved, and the treatment can be performed in a short time.

(Example 5)

An alkali metal salt recovery process was performed in the same manner as in Example 4 except that the alkali metal ion recovery rate in the nanofiltration step was checked by appropriately analyzing the permeated liquid without monitoring the operating pressure using the equation (2).

The results of this process are shown in Table 4. Since the time is required for the appropriate analysis, the treatment time is increased as compared with the case of monitoring the operating pressure using the equation (2).

(Example 6)

An alkali metal salt recovery process was performed in the same manner as in Example 4 except that the solutions Xc were used.

The results of this process are shown in Table 4.

(Example 7)

In the process configuration shown in FIG. 9, the nanofiltration membrane B was used as the nanofiltration membranes of the nanofiltration membrane unit A (2a) and the nanofiltration membrane unit B (2b), the reverse osmosis membrane D was used as the reverse osmosis membrane of the first reverse osmosis membrane unit 3a, the reverse osmosis membrane D was used as the reverse osmosis membrane of the high-removal reverse osmosis membrane unit 4, and a semi-batch treatment step was performed in the order of solutions Xc 1 to 3 to perform an alkali metal salt recovery process. The first nanofiltration step and the second nanofiltration step were performed by constant flow rate filtration at a permeated liquid flow rate of 60 L/min. The alkali metal ion recovery rate in the first nanofiltration step and the second nanofiltration step was checked by monitoring the operating pressure using the equation (2), and the filtration was continued until the alkali metal ion recovery rate reached 93% in the first nanofiltration step and the alkali metal ion recovery rate reached 96% in the second nanofiltration step. The reverse osmosis filtration step was performed by constant flow rate filtration at a permeated liquid flow rate of 60 L/min and continued until the operating pressure reached 7 MPa. Note that, each of the nanofiltration membrane unit and the reverse osmosis membrane unit was used by connecting four 8 inch elements in series.

The results of this process are shown in Table 4. It can be seen that boron can be removed by performing concentration using the reverse osmosis membrane D, which is a low-removal membrane.

(Example 8)

In the process configuration shown in FIG. 3, the nanofiltration membrane B was used as the nanofiltration membranes of the nanofiltration membrane unit A (2a) and the nanofiltration membrane unit B (2b), the reverse osmosis membrane D was used as the reverse osmosis membrane of the first reverse osmosis membrane unit 3a, the reverse osmosis membrane D was used as the reverse osmosis membrane of the high-removal reverse osmosis membrane unit 4, and a semi-batch treatment step was performed in the order of solutions Xc 1 to 3 to perform an alkali metal salt recovery process. The first nanofiltration step and the second nanofiltration step were performed by constant flow rate filtration at a permeated liquid flow rate of 60 L/min. The alkali metal ion recovery rate in the first nanofiltration step and the second nanofiltration step was checked by monitoring the operating pressure using the equation (2), the filtration was continued until the alkali metal ion recovery rate reached 93% in the first nanofiltration step and the alkali metal ion recovery rate reached 96% in the second nanofiltration step, and the reverse osmosis filtration step was performed by constant flow rate filtration at a permeated liquid flow rate of 60 L/min and continued until the operating pressure reached 7 MPa. Note that, each of the nanofiltration membrane unit and the reverse osmosis membrane unit was used by connecting four 8 inch elements in series.

The results of this process are shown in Table 4. It can be seen that boron can be removed more than in Example 7 by performing concentration using the reverse osmosis membrane D, which is a low-removal membrane, and providing a circulation step in the reverse osmosis filtration step.

(Example 9)

In the process configuration shown in FIG. 8, the nanofiltration membrane A was used as the nanofiltration membranes of the nanofiltration membrane unit A (2a) and the nanofiltration membrane unit B (2b), the reverse osmosis membrane C was used as the reverse osmosis membrane of the first reverse osmosis membrane unit 3a, a semi-batch treatment step was performed on the solutions Xa in the order of Nos. 1 to 3, and the alkali metal salt was recovered. At this time, the liquid to be treated B(1) after the step 2 in the solution Xa1 (that is, the solution X(1)) was added to the liquid to be treated A(3) in the solution Xa3 (that is, the solution X(3)). Note that, the withstand pressure value of the first reverse osmosis membrane unit 3a was 8 MPa. The nanofiltration step was performed by constant flow rate filtration at a permeated liquid flow rate of 60 L/min. The alkali metal ion recovery rate in the nanofiltration step was checked by monitoring the operating pressure using the equation (2), the filtration was continued until the alkali metal ion recovery rate reached 93% in the first nanofiltration step and the alkali metal ion recovery rate reached 80% in the second nanofiltration step, and the reverse osmosis filtration step was performed by constant flow rate filtration at a permeated liquid flow rate of 60 L/min and continued until the operating pressure reached 7 MPa. Note that, each of the nanofiltration membrane unit and the reverse osmosis membrane unit was used by connecting four 8 inch elements in series.

The results of this process are shown in Table 4. It can be seen that the lithium ion can be recovered with a high purity and a high recovery rate by adding the remaining portion of the liquid to be treated B(k) to the liquid to be treated A(p).

(Comparative Example 1)

In the process configuration shown in FIG. 4, the nanofiltration membrane A was used as the nanofiltration membranes of the nanofiltration membrane unit A (2a) and the nanofiltration membrane unit B (2b), the reverse osmosis membrane C was used as the reverse osmosis membrane of the first reverse osmosis membrane unit 3a, and a semi-batch treatment step was performed on the solutions Xa in the order of Nos. 1 to 3 to perform an alkali metal salt recovery process. Note that, all the steps were performed at a permeated liquid flow rate of 60 L/min. Note that, each of the nanofiltration membrane unit and the reverse osmosis membrane unit was used by connecting four 8 inch elements in series.

The results of this process are shown in Table 5. It can be seen that, in the case where the nanofiltration step does not include a circulation step, the lithium recovery rate is low.

(Example 10)

In the process configuration shown in FIG. 5, the nanofiltration membrane A was used as the nanofiltration membrane of the nanofiltration membrane unit A (2a), the reverse osmosis membrane C was used as the reverse osmosis membrane of the first reverse osmosis membrane unit 3a, and the alkali metal salt recovery process was performed on the solutions Xa in the order of Nos. 1 to 3. Note that, the withstand pressure value of the first reverse osmosis membrane unit 3a was 8 MPa. The nanofiltration step was performed by constant flow rate filtration at a permeated liquid flow rate of 60 L/min. The alkali metal ion recovery rate in the nanofiltration step was checked by monitoring the operating pressure using the equation (2), the filtration was continued until the alkali metal ion recovery rate reached 93% in the first nanofiltration step and the alkali metal ion recovery rate reached 80% in the second nanofiltration step, and the reverse osmosis filtration step was performed by constant flow rate filtration at a permeated liquid flow rate of 60 L/min and continued until the operating pressure reached 7 MPa. Note that, all the steps were performed at a permeated liquid flow rate of 60 L/min. Note that, each of the nanofiltration membrane unit and the reverse osmosis membrane unit was used by connecting four 8 inch elements in series.

The results of this process are shown in Table 5.

(Comparative Example 2)

In the system configuration shown in FIG. 6, the nanofiltration membrane A was used as the nanofiltration membrane of the nanofiltration membrane unit A (2a), the reverse osmosis membrane C was used as the reverse osmosis membrane of the first reverse osmosis membrane unit 3a, and a semi-batch treatment step was performed on the solutions Xa in the order of Nos. 1 to 3 to perform an alkali metal salt recovery process. Note that, all the steps were performed at a permeated liquid flow rate of 60 L/min. Note that, each of the nanofiltration membrane unit and the reverse osmosis membrane unit was used by connecting four 8 inch elements in series.

The results of this process are shown in Table 5. It can be seen that, in the case where only the first nanofiltration step is performed, the lithium purity is low.

(Comparative Example 3)

In the process configuration shown in FIG. 7, the nanofiltration membrane A was used as the nanofiltration membranes of the nanofiltration membrane unit A (2a) and the nanofiltration membrane unit B (2b), the reverse osmosis membrane C was used as the reverse osmosis membrane of the first reverse osmosis membrane unit 3a, and a continuous treatment step was performed on the solutions Xa in the order of Nos. 1 to 3 to perform an alkali metal salt recovery process. Note that, all the steps were performed at a permeated liquid flow rate of 60 L/min. Note that, each of the nanofiltration membrane unit and the reverse osmosis membrane unit was used by connecting four 8 inch elements in series.

The results of this process are shown in Table 5. It can be seen that the lithium recovery rate is low in the continuous treatment step.

(Comparative Example 4)

An alkali metal salt recovery process was performed in the same manner as in Comparative Example 1 except that the nanofiltration membrane E was used.

The results of this process are shown in Table 5.

(Example 11)

An alkali metal salt recovery process was performed in the same manner as in Example 1 except that the nanofiltration membrane E was used.

The results of this process are shown in Table 5. It can be seen that the lithium recovery rate is improved as compared with Comparative Example 4 by applying the process according to the present embodiment.

(Example 12)

An alkali metal salt recovery process was performed in the same manner as in Example 9 except that the nanofiltration membrane E was used.

The results of this process are shown in Table 5. It can be seen that, even in the case of using the nanofiltration membrane E, the lithium ion can be recovered with a high purity and a high recovery rate by adding the remaining portion of the liquid to be treated B(k) to the liquid to be treated A(p).

(Example 13)

In the process configuration shown in FIG. 10, the nanofiltration membrane A was used as the nanofiltration membrane of the nanofiltration membrane unit A (2a), the reverse osmosis membrane C was used as the reverse osmosis membrane of the first reverse osmosis membrane unit 3a, and the alkali metal salt recovery process was performed on the solutions Xa in the order of Nos. 1 to 3. Note that, the withstand pressure value of the first reverse osmosis membrane unit 3a was 8 MPa. The nanofiltration step was performed by constant flow rate filtration at a permeated liquid flow rate of 60 L/min. The alkali metal ion recovery rate in the nanofiltration step was checked by monitoring the operating pressure using the equation (2), the filtration was continued until the alkali metal ion recovery rate reached 93% in the first nanofiltration step and the alkali metal ion recovery rate reached 80% in the second nanofiltration step, and the reverse osmosis filtration step was performed by constant flow rate filtration at a permeated liquid flow rate of 60 L/min and continued until the operating pressure reached 7 MPa. Note that, all the steps were performed at a permeated liquid flow rate of 60 L/min. Note that, each of the nanofiltration membrane unit and the reverse osmosis membrane unit was used by connecting four 8 inch elements in series.

The results of this process are shown in Table 5. It can be seen that the lithium ion can be recovered with a high purity and a high recovery rate by adding the remaining portion of the liquid to be treated B(k) to the liquid to be treated A(m).

Table 4

| | | | Ex. 1 | Ex. 2 | Ex. 3 | Ex. 4 | Ex. 5 |
|---|---|---|---|---|---|---|---|
| Process configuration | | - | FIG. 1 | FIG. 1 | FIG. 2 | FIG. 1 | FIG. 1 |
| Solution X | Kind | - | Solution Xa | Solution Xb | Solution Xa | Solution Xa | Solution Xa |
| | pH | | 1.0 | 3.7 | 1.0 | 1.0 | 1.0 |
| | Neutral molecule | | - | - | - | - | - |
| Nanofiltration membrane | | - | A | A | A | B | B |
| Reverse osmosis membrane | | - | C | C | C | C | C |
| Process performance | Li$^+$ purity | First batch | % | 99.4 | 98.9 | 99.0 | 99.6 | 99.5 |
| | | Second batch | % | 98.1 | 97.3 | 98.0 | 99.3 | 99.3 |
| | | Third batch | % | 96.3 | 95.8 | 96.1 | 98.6 | 98.5 |
| | Boron concentration ratio | First batch | - | - | - | - | - | - |
| | | Second batch | - | - | - | - | - | - |
| | | Third batch | - | - | - | - | - | - |
| | Li$^+$ recovery rate | First batch | % | 86.5 | 85.1 | 84.4 | 88.4 | 88.0 |
| | | Second batch | % | 86.5 | 85.0 | 84.1 | 87.7 | 96.5 |
| | | Third batch | % | 86.0 | 84.8 | 83.1 | 87.2 | 87.0 |
| | Total treatment time | - | min | 712 | 1130 | 801 | 475 | 713 |

Table 4 (continued)

| | | | Ex. 6 | Ex. 7 | Ex. 8 | Ex. 9 |
|---|---|---|---|---|---|---|
| Process configuration | | - | FIG. 1 | FIG. 9 | FIG. 3 | FIG. 8 |
| Solution X | Kind | - | Solution Xc | Solution Xc | Solution Xc | Solution Xa |
| | pH | | 1.0 | 1.0 | 1.0 | 1.0 |
| | Neutral molecule | | present | present | present | - |
| Nanofiltration membrane | | - | B | B | B | A |
| Reverse osmosis membrane | | - | C | D | D | C |
| Process performance | Li$^+$ purity | First batch | % | 99.4 | 99.4 | 99.5 | 99.7 |
| | | Second batch | % | 99.1 | 99.2 | 99.3 | 98.9 |
| | | Third batch | % | 98.4 | 98.4 | 98.6 | 98.6 |
| | Boron concentration ratio | First batch | - | 0.092 | 0.013 | 0.002 | - |
| | | Second batch | - | 0.179 | 0.026 | 0.003 | - |
| | | Third batch | - | 0.311 | 0.041 | 0.005 | - |
| | Li$^+$ recovery rate | First batch | % | 88.1 | 82.7 | 88.3 | 92.1 |
| | | Second batch | % | 87.0 | 81.1 | 87.3 | 91.2 |
| | | Third batch | % | 86.8 | 81.0 | 87.0 | 91.8 |
| | Total treatment time | - | min | 480 | 485 | 491 | 698 |

Table 5

| | | | | Comp. Ex. 1 | Ex. 10 | Comp. Ex. 2 | Comp. Ex. 3 | Comp. Ex. 4 | Ex. 11 | Ex. 12 | Ex. 13 |
|---|---|---|---|---|---|---|---|---|---|---|---|
| Process configuration | | | - | FIG. 4 | FIG. 5 | FIG. 6 | FIG. 7 | FIG. 4 | FIG. 1 | FIG. 8 | FIG. 10 |
| Solution X | Kind | | - | Solution Xa | Solution Xa | Solution Xa | Solution Xa | Solution Xa | Solution Xa | Solution Xa | Solution Xa |
| | pH | | | 1.0 | 1.0 | 1.0 | 1.0 | 1.0 | 1.0 | 1.0 | 1.0 |
| | Neutral molecule | | | - | - | - | - | - | - | - | - |
| Nanofiltration membrane | | | - | A | A | A | A | E | E | E | A |
| Reverse osmosis membrane | | | - | C | C | C | C | C | C | C | C |
| Process performance | Li$^+$ purity | First batch | % | 99.3 | 99.2 | 84.5 | 99.8 | 70.1 | 71.7 | 79.3 | 99.7 |
| | | Second batch | % | 97.9 | 97.7 | 73.2 | 99.1 | 56.9 | 57.0 | 66.3 | 99.1 |
| | | Third batch | % | 96.0 | 96.1 | 57.8 | 98.9 | 36.9 | 41.2 | 56.8 | 98.6 |
| | Boron concentration ratio | First batch | - | - | - | - | - | - | - | - | - |
| | | Second batch | - | - | - | - | - | - | - | - | - |
| | | Third batch | - | - | - | - | - | - | - | - | - |
| | Li$^+$ recovery rate | First batch | % | 55.5 | 86.2 | 92.2 | 66.1 | 60.3 | 87.1 | 92.1 | 92.3 |
| | | Second batch | % | 50.8 | 86.3 | 92.1 | 62.8 | 52.9 | 87.3 | 91.3 | 91.1 |
| | | Third batch | % | 48.2 | 85.9 | 92.0 | 59.9 | 50.9 | 87.2 | 91.8 | 92.1 |
| | Total treatment time | | min | 102 | 1,172 | 652 | 159 | 98 | 457 | 443 | 1,152 |

In the above Examples and Comparative Examples, the higher the lithium recovery rate and the lithium purity, the more advantageous it is, and the lower the boron concentration ratio and the shorter the total treatment time, the more advantageous it is.

As can be seen from the above results, in Examples 1 to 8, which correspond to the method for recovering an alkali metal salt according to the present invention, the alkali metal salt can be recovered with a higher purity and a higher recovery rate in a short time as compared with Comparative Examples 1 to 4. As can also be seen from the results in Examples 6 to 8, even in the case where a neutral molecule such as boron is contained, the neutral molecule can be removed with high efficiency and the total treatment time can be shortened.

Although the present invention has been described in detail with reference to specific embodiments, it is apparent to those skilled in the art that various changes and modifications can be made without departing from the spirit and scope of the present invention. Note that, the present application is based on Japanese Patent Application No. 2022-192379 filed on November 30, 2022, and the content thereof is incorporated herein by reference. All references cited herein are incorporated as a whole.

INDUSTRIAL APPLICABILITY

The present invention can be suitably used as a method for efficiently separating and recovering an alkali metal such as lithium from a lithium ion battery, and a waste material, a waste liquid, an ore, or a slag generated in a production process therefor.

REFERENCE SIGNS LIST

1 ultrafiltration membrane unit
2a nanofiltration membrane unit A
2b nanofiltration membrane unit B
3a first reverse osmosis membrane unit
3b second reverse osmosis membrane unit
4 high-removal reverse osmosis membrane unit
5a first tank
5b second tank
5c third tank
5d fourth tank
5e fifth tank
5f sixth tank
5g seventh tank
5h eighth tank

**Claims**

1. A method for recovering an alkali metal salt, the method comprising the following step 1 and step 2,

step 1: a first nanofiltration step of feeding a solution X containing an alkali metal ion as a liquid to be treated A to a nanofiltration membrane unit A to separate the liquid to be treated A into a permeated liquid A and a concentrated liquid B, mixing the concentrated liquid B with a remaining portion of the liquid to be treated A, and feeding the mixture to the nanofiltration membrane unit A again to further obtain the permeated liquid A; and
step 2: a second nanofiltration step of
feeding the permeated liquid A obtained in the step 1 or a concentrated liquid of the permeated liquid A as a liquid to be treated B to the nanofiltration membrane unit A to separate the liquid to be treated B into a permeated liquid C and a concentrated liquid D, mixing the concentrated liquid D with a remaining portion of the liquid to be treated B, and feeding the mixture to the nanofiltration membrane unit A again to further obtain the permeated liquid C, or
feeding the permeated liquid A obtained in the step 1 or a concentrated liquid of the permeated liquid A as a liquid to be treated B to a nanofiltration membrane unit B to separate the liquid to be treated B into a permeated liquid C and a concentrated liquid D, mixing the concentrated liquid D with a remaining portion of the liquid to be treated B, and feeding the mixture to the nanofiltration membrane unit B again to further obtain the permeated liquid C.

2. The method for recovering an alkali metal salt according to claim 1, wherein

a treatment for obtaining the permeated liquid C from the solution X through the step 1 and the step 2 is sequentially performed on N (N: an integer of 2 or more) solutions X,
the nanofiltration membrane unit B is used in the step 2, and
among the N solutions X, while performing the step 2 after performing the step 1 on a k-th solution X(k) (k: an integer of 1 or more and (N-1) or less), the step 1 is performed on a (k+1)th solution X(k+1) in parallel.

3. The method for recovering an alkali metal salt according to claim 1 or 2, further comprising:
a step of diluting at least one of the liquid to be treated A and the liquid to be treated B.

4. The method for recovering an alkali metal salt according to claim 2, further comprising the following step 3,
step 3: a reverse osmosis filtration step of concentrating at least one of a k-th permeated liquid A(k) and a k-th permeated liquid C(k) for at least one solution X(k).

5. The method for recovering an alkali metal salt according to claim 4, wherein the step 3 is performed only once on the permeated liquid C(k).

6. The method for recovering an alkali metal salt according to claim 1 or 2, wherein the solution X has a pH of 4 or less.

7. The method for recovering an alkali metal salt according to claim 1 or 2, wherein the alkali metal ion includes a lithium ion.

8. The method for recovering an alkali metal salt according to claim 1 or 2, comprising the following step 4,
step 4: a step of adding a remaining portion of a k-th liquid to be treated B(k) (k: an integer of 1 or more and (N-1) or less), which has been mixed with a k-th concentrated liquid D(k), to an m-th solution X(m) (m: an integer of (k+1) or more and N or less) or an m-th liquid to be treated A(m) after end of the step 2 on the k-th solution X(k) among N solutions X (N: an integer of 2 or more) when the N solutions X are present.

9. The method for recovering an alkali metal salt according to claim 1 or 2, wherein

a nanofiltration membrane included in at least one of the nanofiltration membrane unit A and the nanofiltration membrane unit B has a porous support membrane and a separation functional layer, and
when the nanofiltration membrane is irradiated with a positron beam from a surface on a separation functional layer side, an average pore diameter R1 and an average pore diameter R2 of the separation functional layer derived from a positron annihilation lifetime measurement method satisfy $0.90 \leq R1/R2 \leq 1.10$,
R1: an average pore diameter under condition of positron beam intensity of 0.1 keV
R2: an average pore diameter under condition of positron beam intensity of 0.5 ke V.

10. The method for recovering an alkali metal salt according to claim 1 or 2, wherein at least one of the step 1 and the step 2 is performed at a constant permeation flow rate, and at least one of the step 1 and the step 2 is ended when an alkali metal ion recovery rate A (%) reaches a target value based on the following equation (2) while monitoring a temporal change in an operating pressure,
[Math. 1]

$$A(\%) = \frac{(Q_F - (1-S)^{-R} Q_c)}{V_0} \int_0^{t_b} \frac{P}{P_0} \, dt \qquad (2)$$

(in the equation (2), the alkali metal ion recovery rate A (%), an operating pressure P (Pa), an initial operating pressure $P_0$ (Pa), an initial liquid amount $V_0$ (m$^3$) of a treatment target, an alkali metal ion removal rate R (%) of nanofiltration membrane, a liquid recovery rate S (%) in nanofiltration step, a feed flow rate $Q_F$ (m$^3$/s), a concentrated liquid flow rate $Q_c$ (m$^3$/s), and a filtration end time t = tb).

11. The method for recovering an alkali metal salt according to claim 4 or 5, wherein at least one of the permeated liquid A(k) and the permeated liquid C(k) contains a neutral molecule having no charge under a condition of a pH of 3 or less, and a reverse osmosis filtration membrane used in the reverse osmosis filtration step is a low-removal reverse osmosis membrane in which an isopropyl alcohol removal rate when an isopropyl alcohol aqueous solution having a temperature of 25°C and a pH of 6.5 is permeated at an operating pressure of 0.5 MPa is 70% or more and less than 85%.

12. The method for recovering an alkali metal salt according to claim 11, wherein the neutral molecule is a boron compound.

13. The method for recovering an alkali metal salt according to claim 12, wherein the step 3 includes a circulation step of mixing a concentrated liquid obtained in the reverse osmosis filtration step with a solution to be supplied to the reverse osmosis filtration step.

14. The method for recovering an alkali metal salt according to claim 11, further comprising:
a step of feeding a permeated liquid obtained in the reverse osmosis filtration step to a high-removal reverse osmosis membrane unit including a high-removal reverse osmosis membrane having an isopropyl alcohol removal rate of 85% or more and 95% or less when an isopropyl alcohol aqueous solution having a temperature of 25°C and a pH of 6.5 is permeated at an operating pressure of 0.5 MPa, and adding a obtained permeated liquid as dilution water for diluting at least one of the liquid to be treated A and the liquid to be treated B.

15. An apparatus for recovering an alkali metal salt, comprising:

a first separation unit configured to separate a solution containing an alkali metal ion as a liquid to be treated A into a permeated liquid A and a concentrated liquid B using a first nanofiltration membrane unit;
a first circulation unit configured to mix the concentrated liquid B with a remaining portion of the liquid to be treated A;
a second separation unit configured to separate the permeated liquid A or a concentrated liquid of the permeated liquid A as a liquid to be treated B into a permeated liquid C and a concentrated liquid D using a second nanofiltration membrane unit;
a second circulation unit configured to mix the concentrated liquid D with a remaining portion of the liquid to be treated B;
a dilution unit configured to add dilution water to at least one of the liquid to be treated A and the liquid to be treated B;
a flow rate control unit configured to control flow rates of the permeated liquid A and the concentrated liquid B in the first separation unit and flow rates of the permeated liquid C and the concentrated liquid D in the second separation unit; and
a flow rate control unit configured to synchronize, in the dilution unit, an addition flow rate of the dilution water and a permeated liquid flow rate when the liquid to be treated, to which the dilution water has been added, is fed to the nanofiltration membrane unit.

## FIG. 1

## FIG. 2

## FIG. 3

*FIG. 4*

SOLUTION X(k)

1  5a  2a  5b

5c  2b  5d  5e  3a  5f

*FIG. 5*

SOLUTION X(k)

1  5a  2a  5b

5e  3a  5f

*FIG. 6*

SOLUTION X(k)

1  5a  2a  5b

5e  3a  5f

FIG. 7

FIG. 8

FIG. 9

# FIG. 10

## INTERNATIONAL SEARCH REPORT

International application No.

**PCT/JP2023/042994**

### A. CLASSIFICATION OF SUBJECT MATTER

*C22B 26/00*(2006.01)i; *B01D 61/02*(2006.01)i; *B01D 61/58*(2006.01)i; *B01D 69/00*(2006.01)i; *B01D 69/02*(2006.01)i; *B01D 69/10*(2006.01)i; *B01D 69/12*(2006.01)i; *B09B 3/30*(2022.01)i; *C01D 15/06*(2006.01)i; *C22B 3/22*(2006.01)i; *B09B 101/16*(2022.01)n

FI: C22B26/00; B01D61/02 500; B01D61/58; B01D69/00; B01D69/02; B01D69/10; B01D69/12; B09B3/30 ZAB; C01D15/06; C22B3/22; B09B101:16

According to International Patent Classification (IPC) or to both national classification and IPC

### B. FIELDS SEARCHED

Minimum documentation searched (classification system followed by classification symbols)

C22B26/00; B01D61/02; B01D61/58; B01D69/00; B01D69/02; B01D69/10; B01D69/12; B09B3/30; C01D15/06; C22B3/22; B09B101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2012/077610 A1 (TORAY INDUSTRIES, INC.) 14 June 2012 (2012-06-14) claim 1, fig. 1 | 1-15 |
| A | WO 2021/215484 A1 (TORAY INDUSTRIES, INC.) 28 October 2021 (2021-10-28) paragraph [0001] | 1-15 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 February 2024** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2023/042994**

| Patent document cited in search report | | | Publication date (day/month/year) | Patent family member(s) | | | Publication date (day/month/year) |
|---|---|---|---|---|---|---|---|
| WO | 2012/077610 | A1 | 14 June 2012 | CN 103249471 A<br>claim 1, fig. 1 | | | |
| WO | 2021/215484 | A1 | 28 October 2021 | US 2023/0202854 A1<br>paragraph [0001]<br>EP 4141135 A1<br>KR 10-2022-0147157 A<br>CN 115443342 A<br>CA 3181042 A1 | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019018333 A
- WO 2021215484 A

- JP 2022192379 A

**Non-patent literature cited in the description**

- Exploration business for promoting mineral resource development in fiscal 2017 (Mineral resource infrastructure maintenance survey project (Basic survey on formulating strategies for securing mineral resources)) report. Environmental and Energy Office of Mitsubishi Chemical Corporation, March 2018